(19) Europäisches Patentamt / European Patent Office / Office européen des brevets

(11) **EP 3 151 627 B1**

(12) **FASCICULE DE BREVET EUROPEEN**

(45) Date de publication et mention de la délivrance du brevet:
**20.12.2017 Bulletin 2017/51**

(51) Int Cl.:
***H04W 74/08*** *(2009.01)*   ***H04B 7/185*** *(2006.01)*
*H04L 12/801* *(2013.01)*

(21) Numéro de dépôt: **16189769.9**

(22) Date de dépôt: **20.09.2016**

(54) **PROCÉDÉ D'ADAPTATION DYNAMIQUE DE LA CAPACITÉ D'UN CANAL DE TRANSMISSION À CONTENTION**

VERFAHREN ZUR DYNAMISCHEN ANPASSUNG DER KAPAZITÄT EINES ÜBERTRAGUNGSKANALS IM KONKURRENZBETRIEB

METHOD FOR DYNAMICALLY ADAPTING THE CAPACITY OF A CONTENTION-BASED TRANSMISSION CHANNEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.10.2015 FR 1502050**

(43) Date de publication de la demande:
**05.04.2017 Bulletin 2017/14**

(73) Titulaire: **Thales**
**92400 Courbevoie (FR)**

(72) Inventeurs:
• **NIDDAM, David**
**31100 Toulouse (FR)**
• **GINESTE, Mathieu**
**31100 Toulouse (FR)**
• **FAURE, Cécile**
**31100 Toulouse (FR)**
• **ULPAT, Isabelle**
**31100 Toulouse (FR)**

(74) Mandataire: **Tanguy, Yannick et al**
**Marks & Clerk France**
**Conseils en Propriete Industrielle**
**Immeuble Visium**
**22, avenue Aristide Briand**
**94117 Arcueil Cedex (FR)**

(56) Documents cités:
EP-A1- 1 686 746      EP-A1- 2 787 702
US-A1- 2004 136 334      US-A1- 2006 107 164

**Description**

La présente invention concerne un procédé d'adaptation dynamique de la capacité d'un canal de transmission à contention, partagé sur une voie montante par et depuis une pluralité de terminaux vers une passerelle de connexion à un réseau.

La présente invention concerne également un procédé de transmission de paquets de donnée ou de fragments de paquets par une pluralité de terminaux vers une passerelle de connexion à un réseau, le procédé de transmission utilisant ledit procédé d'adaptation dynamique de la capacité du canal de transmission à contention.

La présente invention concerne encore un système de mise en oeuvre du procédé d'adaptation dynamique de la capacité du canal de transmission à contention et un système de mise en oeuvre du procédé de transmission de paquets de données et de fragments de paquets.

De manière générale, l'invention est applicable à tout système de communications nécessitant un canal de transmission à contention sur un lien montant dont le trafic est sporadique, dense et non prédictible, et pouvant utiliser par exemple des satellites transparents ou régénérateurs et/ou des connections sans fil terrestres, voir même des connexions par câble.

Diverses méthodes d'accès à contention sont connues parmi lesquelles le protocole ALOHA à segmentation temporelle ou tramée (en anglais Slotted ALOHA) et ses dérivés combinant l'effet de capture CE (en anglais Capture Effect) et/ou l'effet d'utilisation d'une diversité (temporelle ou fréquentielle) et d'une résolution des conflits d'accès CRD (en anglais Contention Resolution Diversity).

Ces protocoles sont tous des protocoles aléatoires dans lesquels chaque terminal utilisateur accède aux ressources de transmission de manière indépendante vis-à-vis des autres utilisateurs. Pour chaque paquet transmis, l'utilisateur attend un accusé de réception du destinataire. S'il ne le reçoit pas, il retransmet les mêmes données avec un retard aléatoire et ce mécanisme est itéré jusqu'à réception d'un accusé de réception ou jusqu'à ce qu'un nombre maximum de tentatives aient été réalisées.

Afin d'éviter la congestion du canal de transmission en cas de surcharge du canal, il est connu de mettre en oeuvre un mécanisme de contrôle de congestion sous forme d'un algorithme.

Le brevet européen publié sous le numéro EP 1 686 746 B1 décrit un premier algorithme de contrôle de congestion dans le cadre d'un protocole ALOHA à segmentation temporelle avec diversité et avec résolution des conflits CRDSA (en anglais « Contention Resolution Diversity Slotted Aloha »). Cet algorithme utilise une information de charge du réseau. La manière dont cette charge du réseau est évaluée n'est cependant pas précisée dans le document. Une information sur la charge du réseau provenant d'une entité centrale est transmise régulièrement vers les différents terminaux. Si cette charge dépasse un seuil, chaque terminal va augmenter, selon une probabilité décroissante et de manière indépendante, le retard de transmission des fragments qu'il doit émettre d'une trame logique supplémentaire. Si la charge décroit en dessous du seuil, le terminal va également diminuer, selon une probabilité donnée, le retard à l'émission de ses fragments d'une trame logique. Chaque terminal va donc attendre un nombre de trames logiques différent en fonction de l'évolution propre de sa fenêtre de congestion, sachant qu'un fragment et ses répliques ne pourront être transmis que sur une seule trame logique. Par trame logique, on entend un intervalle temporel de durée fixe défini par la norme ou le système de télécommunications employés pour communiquer et qui constitue l'unité temporelle permettant de fixer un repère aux émetteurs et aux récepteurs pour la transmission et la réception des paquets de données ou des fragments de ces paquets. Une trame logique peut être composée d'un nombre donné de tranches temporelles (en anglais « slots ») ou trames physiques élémentaires. En particulier, dans le cas de méthodes d'accès à contention qui, pour chaque fragment de données utiles à émettre, génèrent un ou plusieurs fragments redondants, comme par exemple la méthode CRDSA, l'ensemble des fragments (utile et redondants) est transmis dans une trame logique.

L'approche préconisée concernant le contrôle de congestion dans le brevet européen publié sous le numéro EP 1 686 746 B1, est une approche réactive qui réagit à la surcharge du canal de transmission en utilisant une notion de seuil de charge et qui n'est donc pas une approche préventive. Un nombre de collisions non négligeable peut ainsi apparaitre temporairement au moment où le seuil est franchi et il se peut que le temps de réaction à cette surcharge étant trop grand, cela entraîne des retransmissions de messages ou fragments de message entrainant une augmentation du délai de transmission des messages. Cette approche implique également une politique de contrôle de congestion et d'accès au canal distincte entre terminaux et qui n'est pas gérée de façon centralisée, ce qui peut potentiellement pénaliser certains terminaux et en favoriser d'autres. Cette approche peut potentiellement entraîner une iniquité entre les terminaux utilisateurs et rend difficile l'application de niveaux de qualité de services distincts pour des paquets provenant d'un même terminal ou de terminaux différents. Ces méthodes présentent également l'inconvénient d'augmenter artificiellement la charge du réseau du fait des répliques générées systématiquement pour chaque paquet à émettre, ce qui rend plus difficile l'évaluation de la charge réelle, autrement dit la charge liée aux données utiles.

Afin de remédier aux inconvénients précités, le document EP 2 787 702 A1 propose une approche préventive et décrit un algorithme de contrôle de congestion pour réseau d'accès à contention permettant de minimiser le nombre de retransmissions. L'algorithme comporte une première étape dans laquelle le nombre de terminaux est évalué en permanence en cours d'émission et une deuxième étape au cours de laquelle est définie une fenêtre glissante d'émissions des terminaux, dépendant de l'estimation du nombre de terminaux et ayant pour but de réguler et d'étaler leurs transmissions. Ainsi, le taux de collisions initiales (ou collisions non résolues initiales pour les méthodes émettant plusieurs paquets de données pour un paquet utile) entre paquets émis par plusieurs émetteurs est diminué, le nombre de retransmissions nécessaires devient sensiblement nul et le délai de transmission d'un paquet vers sa destination est sensiblement raccourci. De cette manière, l'étalement préventif permet de conserver la charge en dessous d'un point de fonctionnement choisi pour éviter l'écroulement du réseau. En outre, ce deuxième algorithme est exécutée de façon centralisée (pas de nécessité de capacité de télédétection pour les émetteurs), ce faisant tous les terminaux actifs utilisent, à un instant donné, la même fenêtre de congestion, ce qui permet de contrôler précisément le niveau de congestion et d'assurer une équité entre terminaux.

Les deux documents précités sont limités à la description d'un procédé de contrôle de congestion d'un canal à contention tramé et présupposent une capacité du canal à contention fixé, non modifiable. Le problème d'une mise à disposition d'une capacité de canal suffisante et adapté au besoin en trafic des terminaux n'est ni décrit, ni évoqué dans ces documents.

A ce jour, les systèmes et procédés de transmission connus qui mettent en oeuvre un canal de transmission à contention tramé (synchrone) ou non tramé (asynchrone) utilisent une bande de fréquences ou plus généralement un ensemble de ressources de communication, préconfiguré ou modifiable tout au plus par une planification horaire, afin d'offrir au canal à contention une capacité adaptée à un trafic lisse et prédictible des terminaux.

Lorsque le trafic réel des terminaux devient dense, très sporadique et non prédictifs, les systèmes et procédés actuels engendrent les inadaptations majeures suivantes.

Tout d'abord, une perte de capacité est créée en sur-dimensionnant les ressources allouées au canal à contention quel que soit son type (canal ALOHA tramé (SA) ou non, ou des variantes plus performantes comme le CRDSA). En moyenne, cette surcapacité est bien supérieure au besoin instantané de trafic réel pour absorber des pics de trafic non prédictibles.

Ensuite, la définition d'un dimensionnement du canal à contention pour un profil de trafic moyen, pose un problème lié aux pics de congestion sur le canal non prévisibles mais statistiquement inévitables d'apparition de délais d'accès très élevés et donc une baisse des performances globale du système, voire un écroulement du réseau.

Enfin, la modification de la capacité du canal à contention par une planification horaire pour suivre un « profil » moyen devient inutile lorsque surgissent des évènements imprévisibles (catastrophes naturelles par exemple), puisque la planification est un « modèle » qui suit en moyenne le besoin de trafic des utilisateurs, mais ne correspond pas au besoin instantané et imprévisible en ressources de communication.

En conséquence, la définition d'une capacité « moyenne » à provisionner pour le canal à contention partagé apparait comme une tâche difficile voire impossible. Au niveau usager, le réseau devient indisponible avec un accroissement du temps d'accès et/ou des mécanismes de congestion préventifs sur redémarrage du réseau inefficaces. Au niveau système, la performance de disponibilité décroit.

Le problème technique est de proposer un procédé et un système d'adaptation dynamique de la capacité d'un canal de transmission à contention, partagé sur une voie aller par et depuis une pluralité de terminaux vers une passerelle de connexion à un réseau pour répondre rapidement et de manière adaptée à une demande de trafic dense, sporadique et non prédictible quelque soit les variantes du mode ALOHA SA (CE, CRDSA, etc.) ou non tramé utilisées pour le canal à contention.

A cet effet, l'invention a pour objet un procédé d'adaptation dynamique de la capacité d'un canal de transmission à contention utilisant un protocole d'accès prédéterminé, le canal étant partagé par une pluralité de terminaux TE formant un premier réseau et définissant une voie montante depuis les terminaux vers une passerelle GW de connexion à un deuxième réseau, le procédé étant caractérisé en ce qu'il comprend les étapes suivantes :

.- dans une première étape, fixer la valeur d'une charge externe souhaitée en tant que point de fonctionnement nominal du canal, la charge externe réelle du canal étant égale au taux actuel de nouveaux terminaux entrants émettant une salve respective de données sur le canal ;

.- dans une deuxième étape, déterminer à l'aide d'un modèle mathématique ou d'une simulation, un premier seuil supérieur $S_H$ et un deuxième seuil inférieur $S_L$ d'une grandeur Gr sensible de manière monotone à une charge externe du canal à contention, les charges externes du canal à contention supérieure et inférieure correspondant respectivement au premier seuil supérieur $S_H$ ou deuxième seuil inférieur $S_L$, la grandeur sensible Gr dépendant d'une première probabilité de réception d'une salve vide Pe, ou d'une paire de la première probabilité Pe et d'une deuxième probabilité de réception réussie d'une salve Ps, ou d'une troisième probabilité d'une salve ayant subi une collision Pc, et du type et de paramètres définissant le protocole d'accès à contention;

.- dans une troisième étape, estimer en continu sur une fenêtre d'observation de largeur prédéfinie et à partir de mesures en réception dans ladite fenêtre d'observation des salves attendues une première probabilité mesurée de réception d'une salve attendue vide Pe, ou une paire de probabilités mesurées formée par la première probabilité mesurée Pe et une deuxième probabilité mesurée de réception réussie d'une salve Ps, ou une troisième probabilité mesurée d'une salve ayant subi une collision Pc ;

.- dans une quatrième étape, déterminer la grandeur sensible Gr mesurée actuelle Gr en fonction de la première probabilité mesurée Pe, ou de la paire des probabilités mesurées Pe et Ps, ou de la troisième probabilité mesurée Pc;

.- dans une cinquième étape de prise de décision, lorsqu'un franchissement du premier seuil supérieur $S_H$ par la grandeur sensible actuelle a lieu une fois ou plusieurs fois consécutives en s'éloignant de la valeur de la grandeur correspondant à la charge externe nominale, augmenter la capacité actuelle du canal de transmission en libérant des ressources de communication supplémentaires et en informant par une voie retour les terminaux de la nouvelle composition du canal de transmission à capacité augmentée ; et/ou lorsqu'un franchissement du deuxième seuil inférieur $S_L$ a lieu par la grandeur sensible actuelle une fois ou plusieurs fois consécutives en s'éloignant de la valeur de la grandeur correspondant à la charge externe nominale, diminuer la capacité actuelle du canal de transmission en retirant des ressources de communication en termes de fréquences parmi les ressources de transmission mis actuellement à disposition et en informant par la voie retour les terminaux de la nouvelle composition du canal de transmission à capacité diminuée.

Suivant des modes particuliers de réalisation, le procédé d'adaptation dynamique de la capacité d'un canal de transmission à contention comprend l'une ou plusieurs des caractéristiques suivantes :

.- la largeur de la fenêtre d'observation définissant la période temporelle d'observation est choisie suffisamment petite pour filtrer des amplitudes d'un bruit de fluctuations rapides de la probabilité (Pe) ou des deux probabilités (Pe, Ps) estimées en continu et permettre une réactivité adaptée ;

.- la grandeur Gr sensible de manière monotone à la charge externe du canal à contention est comprise dans l'ensemble formé par la première probabilité mesurée de réception de salve attendue vide Pe ; la troisième probabilité mesurée de collision de salve Pc ; une charge externe G calculée à partir de la première probabilité mesurée de réception de salve attendue vide Pe et d'un nombre maximum de retransmissions K ;

.- la troisième probabilité mesurée de collision de salve Pc est soit estimée directement à partir du nombre mesuré de salves ayant subi une collision observées dans la fenêtre d'observation ; soit calculée à partir de première probabilité mesurée de réception de salve attendue vide Pe et de la deuxième probabilité mesurée de réception correcte de salve Ps suivant l'expression :

$$P_c = 1 - (P_e + P_S) \; ;$$

.- la charge externe G est calculée pour un canal SA à partir de l'expression

$$G = -P_e * Ln(P_e)/[1 - (1 - P_e)^{K+1}]$$

où

Pe désigne la première probabilité mesurée de réception de salve attendue vide, et
K désigne le nombre maximum de retransmissions ;

.- le premier seuil supérieur $S_H$ et le deuxième seuil inférieur $S_L$ de la grandeur sensible sont déterminés à partir d'un modèle représentatif du protocole utilisé par le canal à contention de sorte à minimiser les erreurs de décisions de changement de capacité, et stabiliser les décisions de changement de capacité, et assurer une bonne réactivité temporelle de changement, et optimiser les performances du canal pour éviter un écroulement du canal en raison d'un trop grand nombre de collisions ;

.- une décision $D_{up}$ est prise d'augmenter la capacité du canal lorsque le franchissement du premier seuil supérieur $S_H$ par en dessus a eu lieu un premier nombre $N_{up}$ de fois consécutives, et/ou une décision $D_{down}$ est prise de diminuer la capacité du canal lorsque le franchissement du deuxième seuil inférieur $S_L$ a eu lieu un deuxième nombre $N_{down}$ de fois consécutives par en dessus, le premier nombre $N_{up}$ étant le plus petit nombre entier supérieur ou égal à deux tel que : $(1 - D_{up})^{N_{up}} \leq P_{up\_res}$ où $D_{up}$ désigne la probabilité d'une bonne décision lorsque le seuil supérieur a été franchi par en dessous une fois et $P_{up\_res}$ une probabilité résiduelle de mauvaise décision prédéterminé, et le deuxième nombre $N_{down}$ étant le plus petit nombre entier supérieur ou égal à deux tel que : $(1 - D_{down})^{N_{down}} \leq P_{down\_res}$ où $D_{down}$ désigne la probabilité d'une bonne décision lorsque le seuil inférieur a été franchi par en dessus une fois et $P_{down\_res}$ une probabilité résiduelle de mauvaise décision prédéterminé ;

.- le deuxième nombre de franchissements consécutifs $N_{down}$ est nettement supérieur ou égal au deuxième nombre de franchissements consécutifs $N_{up}$ dans un rapport $N_{down}/N_{up}$ supérieur ou égal à 5, de préférence supérieur ou égal à 10 ;

.- l'augmentation et/ou la décroissance décidé de capacité du canal est effectuée en suivant de manière un même profil de croissance et décroissance de la capacité par palier ou degré ;

.- le protocole d'accès à contention utilisé par le canal est compris dans l'ensemble des protocoles contention tramé formé par le protocole ALOHA à segmentation temporelle ou tramée (en anglais Slotted ALOHA) et ses dérivés combinant l'effet de capture CE (en anglais Capture Effect) et/ou l'effet d'utilisation d'une diversité (temporelle ou fréquentielle) et d'une résolution des conflits d'accès CRD (en anglais Contention Resolution Diversity) ;

.- le procédé d'adaptation dynamique de la capacité du canal RACH comprend en outre une étape d'initialisation au cours de laquelle à un instant de démarrage la capacité actuelle du canal de transmission est mise à une valeur de capacité initiale prédéterminée ;

.- la capacité initiale est une capacité moyenne fixée arbitrairement au minimum égale à une salve toutes les N trames entières.

L'invention a également pour objet un procédé de transmission de paquets de données ou de fragments de paquets sous la forme de salves au travers d'un canal de transmission à contention, partagé par une pluralité de terminaux formant un premier réseau et définissant une voie montante depuis les terminaux vers une passerelle de connexion à un deuxième réseau, ledit procédé de transmission étant caractérisé en ce qu'il comprend un procédé d'adaptation dynamique de la capacité du canal de transmission tel que défini ci-dessus, et un procédé de contrôle de flux couplé audit procédé d'adaptation dynamique de la capacité ; le procédé de contrôle de flux comprenant les étapes suivantes :

.- dans une sixième étape fournir une liste actuelle de classes de terminaux distinguant les classes des terminaux autorisés à émettre et les classes des terminaux auxquels l'émission est interdite,

.- dans une septième étape, lorsque le franchissement du seuil supérieur $S_H$ induit une décision d'augmenter la capacité du canal et qu'une taille maximale prédéterminée du canal est atteinte, déclencher une augmentation du niveau de contrôle de flux en interdisant l'émission à une classe de terminaux, autorisée à émettre de la liste actuelle et choisie aléatoirement, et

.- dans la même septième étape, lorsque le franchissement du seuil inférieur $S_L$ induit une décision de diminuer la capacité du canal, déclencher une baisse du niveau de contrôle de flux en autorisant l'émission à une classe de terminaux, interdite d'émettre de la liste actuelle et choisie aléatoirement ;

Suivant des modes particuliers de réalisation, le procédé de transmission comprend l'une ou plusieurs des caractéristiques suivantes :

.- le procédé de transmission comprend un procédé de contrôle de congestion, couplé au procédé de contrôle de flux et dans lequel l'étalement des délais des terminaux autorisés à émettre est une fonction croissante du niveau de contrôle de flux.

L'invention a également pour objet un système de transmission sous la forme de salves de paquets de données ou de fragments de paquets au travers d'un canal de transmission à contention, comprenant une pluralité de terminaux formant un premier réseau, et une passerelle de connexion à un deuxième réseau, la passerelle de connexion étant configurée pour recevoir sous forme de salves des paquets de donnée ou des fragments de paquets émis par les terminaux sur un canal de transmission de voie montante à contention, et pour adapter dynamiquement la capacité dudit canal de transmission de voie montante à contention en fonction d'un trafic de terminaux entrants, ledit système de transmission étant caractérisé en ce que la passerelle de connexion est configurée pour :

.- estimer en continu sur une fenêtre d'observation de largeur prédéfinie et à partir de mesures effectuées en réception dans ladite fenêtre d'observation des salves attendues une première probabilité de réception de salve attendue vide $P_e$, ou une paire de probabilités formée par la première probabilité Pe et une deuxième probabilité de réception correcte de salve $P_s$, ou une troisième probabilité de collision de salve $P_c$ ;

.- déterminer une grandeur actuelle Gr sensible de manière monotone à la charge externe du canal à contention à partir de la première probabilité estimée Pe ou la paire de probabilités formée par la première probabilité estimée Pe et la deuxième probabilité estimée de réception d'une salve correcte $P_s$, ou la troisième probabilité de réception d'une salve ayant subi une collision d'une salve $P_c$ ; puis

.- lorsqu'un franchissement d'un premier seuil supérieur $S_H$ par la grandeur actuelle a lieu une fois ou plusieurs fois consécutives en s'éloignant de la valeur de la grandeur correspondant à la charge externe nominale, augmenter la capacité actuelle du canal de transmission en libérant des ressources de communication supplémentaires en termes de fréquences supplémentaires et en informant par une voie retour les terminaux de la nouvelle composition du canal de transmission à capacité augmentée ; et/ou

.- lorsqu'un franchissement du deuxième seuil inférieur $S_L$ par la grandeur actuelle a lieu une fois ou plusieurs fois consécutives en s'éloignant de la valeur de la grandeur correspondant à la charge externe nominale, diminuer la capacité actuelle du canal de transmission en retirant des ressources de communication en termes de fréquences parmi les ressources de transmission mis actuellement à disposition et en informant par la voie retour les terminaux de la nouvelle composition du canal de transmission à capacité diminuée.

Suivant des modes particuliers de réalisation, le système de transmission comprend l'une ou plusieurs des caractéristiques suivantes :

la passerelle de connexion est configurée pour mettre en oeuvre un mécanisme de contrôle de flux consistant à :

.- fournir une liste actuelle de classes de terminaux distinguant les classes des terminaux autorisés à émettre et les classes des terminaux auxquels l'émission est interdite, et
.* lorsque le franchissement du seuil supérieur $S_H$ par la grandeur actuelle Gr induit une décision d'augmenter la capacité du canal et qu'une taille maximale prédéterminée du canal est atteinte, déclencher une augmentation du niveau de contrôle de flux en interdisant l'émission à une classe de terminaux, autorisée à émettre de la liste actuelle et choisie aléatoirement, et
.* lorsque le franchissement du seuil inférieur $S_L$ par la grandeur actuelle Gr induit une décision de diminuer la capacité du canal, déclencher une baisse du niveau de contrôle de flux en autorisant l'émission à une classe de terminaux, interdite d'émettre de la liste actuelle et choisie aléatoirement.

L'invention sera mieux comprise à la lecture de la description de plusieurs formes de réalisation qui va suivre, donnée uniquement à titre d'exemple et faite en se référant aux dessins sur lesquels :

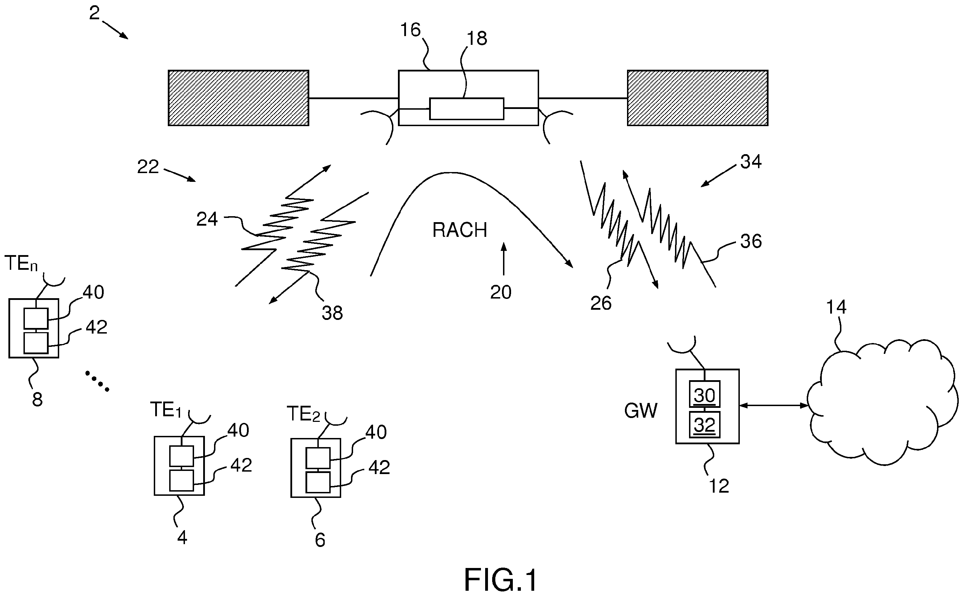

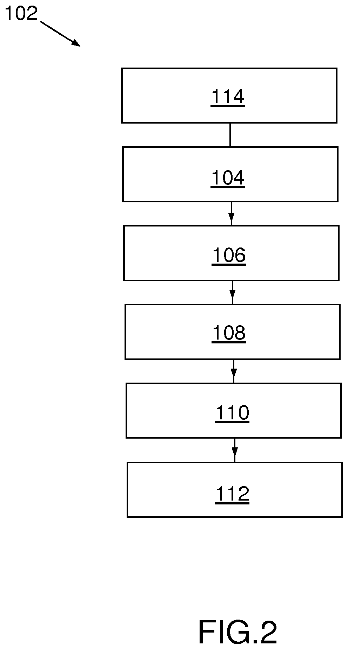

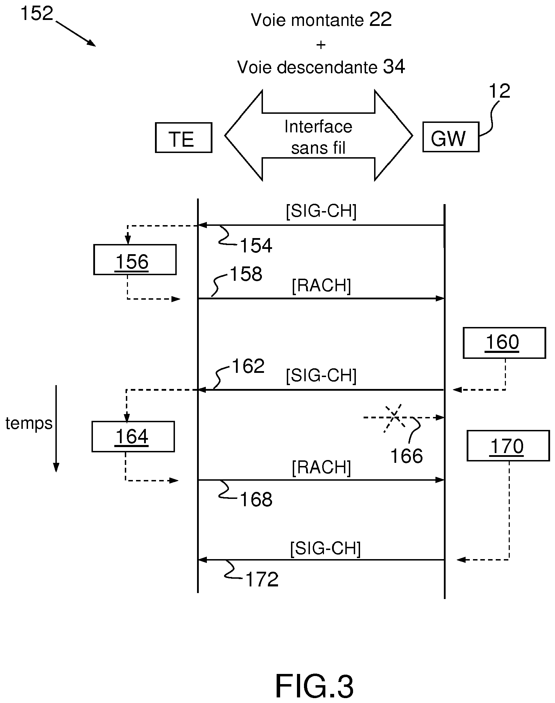

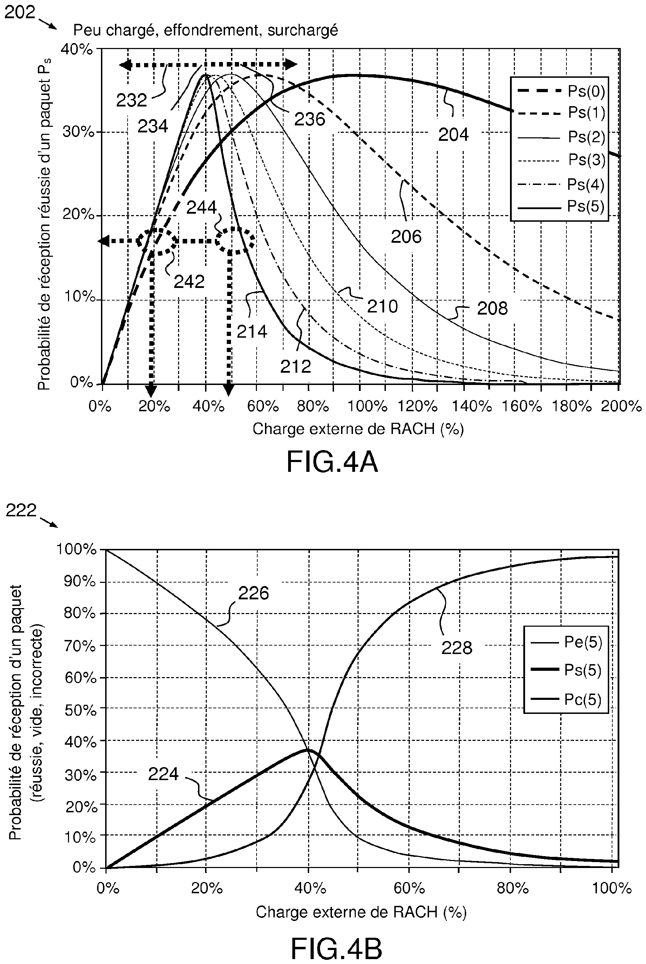

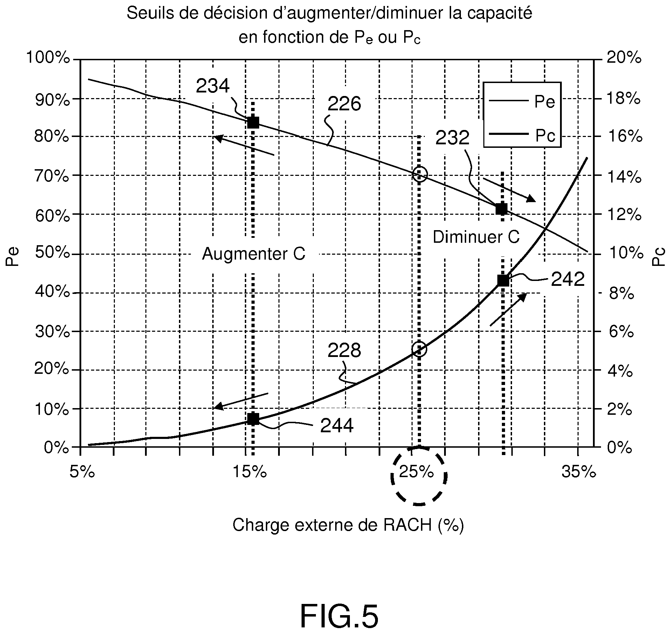

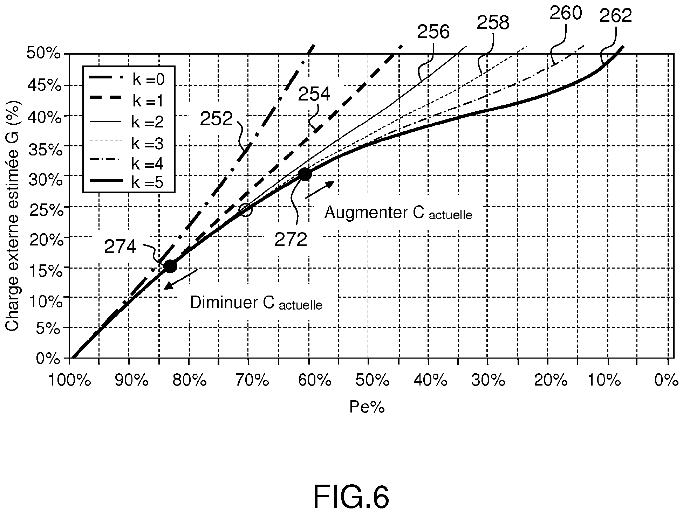

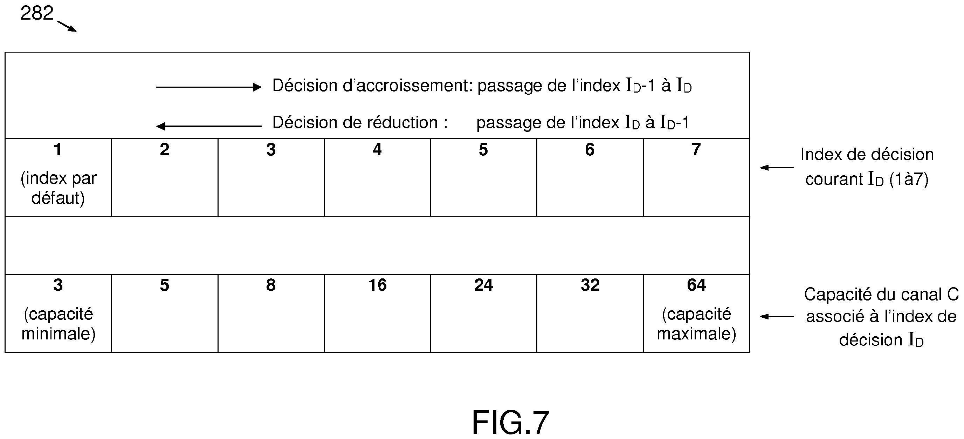

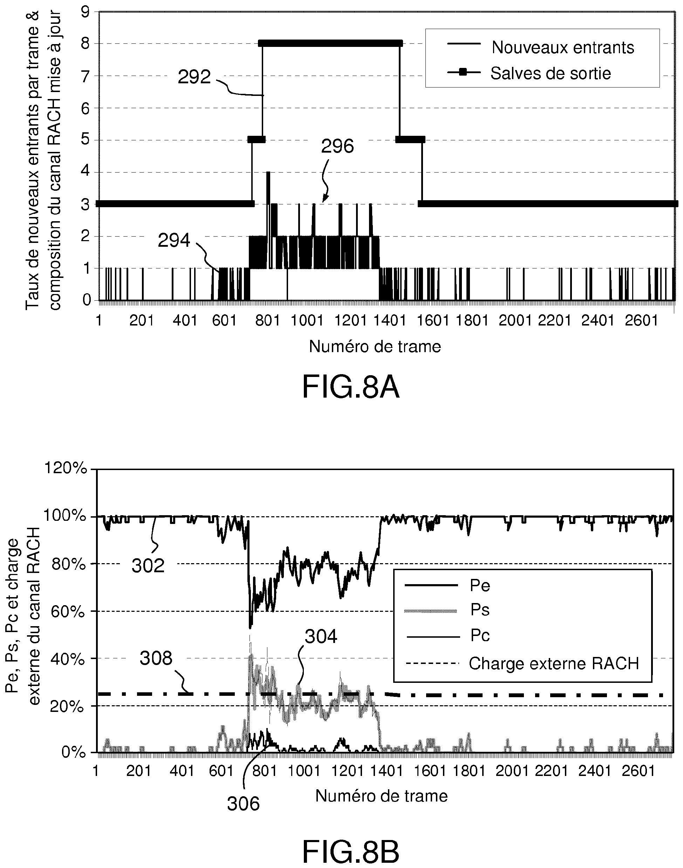

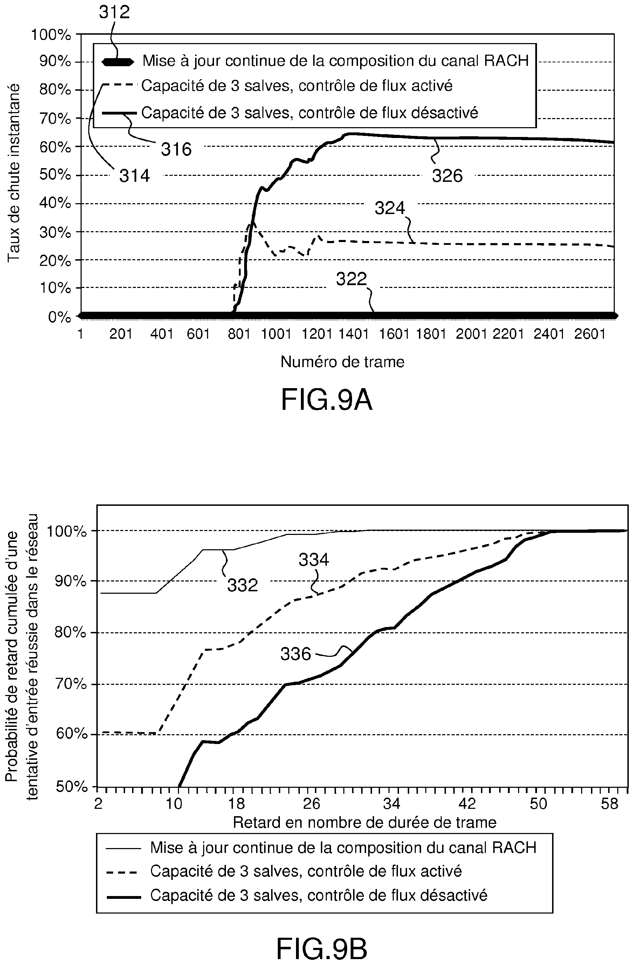

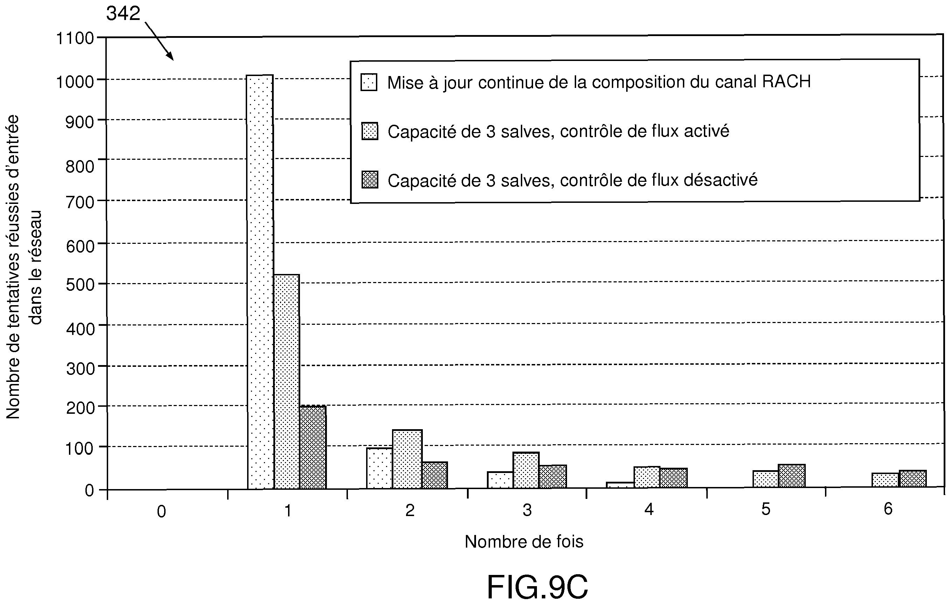

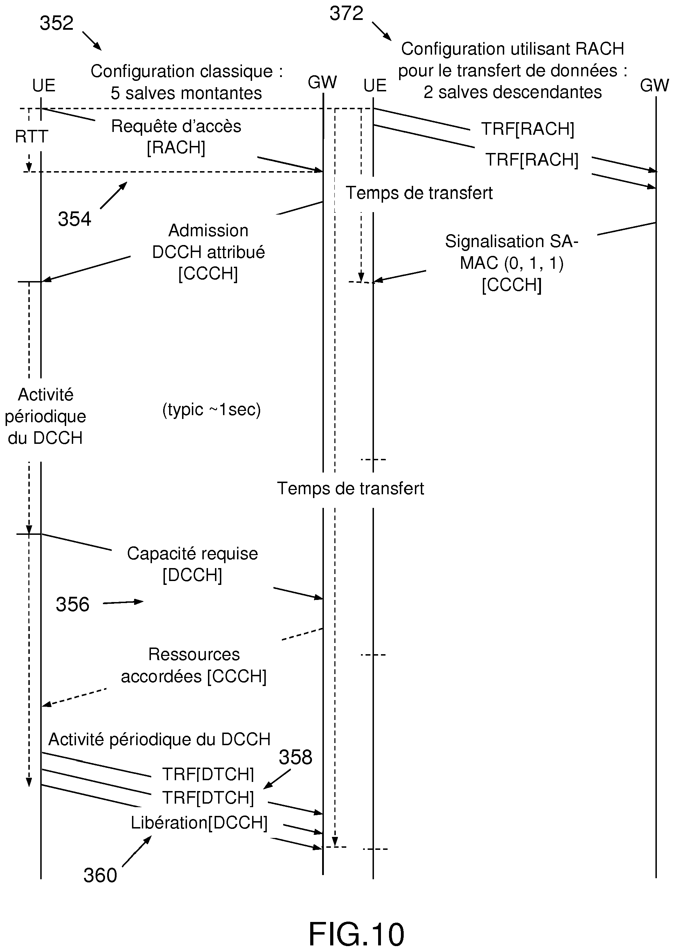

.- la Figure 1 est une vue schématique d'un système de transmissions configuré pour mettre en oeuvre un procédé d'adaptation dynamique de la capacité d'un canal à contention, ici considéré tramé à titre d'exemple, selon l'invention ;
.- la Figure 2 est un ordinogramme d'un procédé d'adaptation dynamique de la capacité d'un canal à contention, ici considéré tramé à titre d'exemple, selon l'invention, mis en oeuvre par le réseau de communications de la Figure 1 ;
.- la Figure 3 est une vue d'un diagramme temporel des signaux échangés entre un terminal utilisateur TE du réseau et une passerelle de connexion GW (en anglais gateway) du réseau de communications de la Figure 1 lors de l'établissement d'une communication et/ou une communication établie entre le terminal utilisateur et la passerelle de connexion, cette vue étant focalisée sur les échanges permettant la mise en oeuvre du procédé d'adaptation dynamique de l'invention décrit dans la Figure 2 ;
.- les Figures 4A et 4B sont respectivement une vue de l'évolution de la probabilité de réception réussie d'une salve Ps en fonction de la charge externe du canal pour différentes valeurs du nombre maximal de retransmissions K variant de 1 à 5 et une vue regroupant les évolutions de la probabilité de réception réussie d'une salve Ps, de la probabilité de réception d'une salve attendue et vide Pe, de la probabilité de collision d'une salve attendue Pc en fonction de la charge externe du canal pour un nombre maximal de retransmissions K égal à 5 lorsque le protocole utilisé est de type SA (Slotted ALOHA) ;
.- la Figure 5 est une vue des paramètres pertinents régissant la décision d'augmenter ou de diminuer la capacité du canal en fonction d'une grandeur mesurée Pe ou Pc représentative avec une sensibilité suffisante de la charge externe du canal RACH lorsque ce canal est un canal de type SA et le nombre maximal de retransmissions K est égal à 5 ;
.- la Figure 6 est une vue des paramètres pertinents régissant la décision d'augmenter ou de diminuer la capacité du canal en fonction d'une grandeur G de charge externe, calculée à partir de probabilité mesurée Pe représentative quasi-linéairement de la charge externe du canal RACH lorsque ce canal est un canal de type SA et le nombre maximal de retransmissions K est égal à 5 ;
.- la Figure 7 est une vue d'un exemple de table paramétrable permettant d'imposer un profil de commande à suivre lorsque des décisions d'augmentation et/ou de diminution de la capacité du canal à contention sont exécutées ;
.- les Figures 8A et 8B sont respectivement une première vue de l'évolution en temps réel de la capacité du canal à contention sur un pic de demandes d'entrée dans le réseau d'accès et d'une stabilisation simulée des probabilités Pe, Ps, Pc et de la charge externe à maintenir autour du point de fonctionnement requis ;
.- les Figures 9A, 9B et 9C sont respectivement une première vue de l'évolution du taux d'échec selon trois modes d'adaptation du canal dont celui de l'invention, une deuxième vue de l'évolution de la probabilité cumulée de succès en fonction du temps écoulé depuis la première tentative selon les mêmes modes d'adaptation du canal, et une troisième vue de la répartition du nombre de transmissions requis en fonction des trois modes d'adaptation du canal ;
.- la Figure 10 est une vue comparative des échanges de signalisation requis pour un transfert d'un petit volume de données utilisateur depuis un terminal TE vers la passerelle GW entre une première configuration classique de transmission dans laquelle le canal à contention RACH (en anglais « Random Access Channel ») est utilisé seulement dans la phase d'accès au réseau et d'autres canaux d'un mode DAMA (en anglais « Demand Assigned Multiple Access ») ou PAMA (en anglais « Pulse-Address Multiple Access) sont utilisés pour le transfert effectif des données utilisateur, et une deuxième configuration utilisant l'invention dans laquelle le canal RACH transfert effectivement les données utilisateur ;

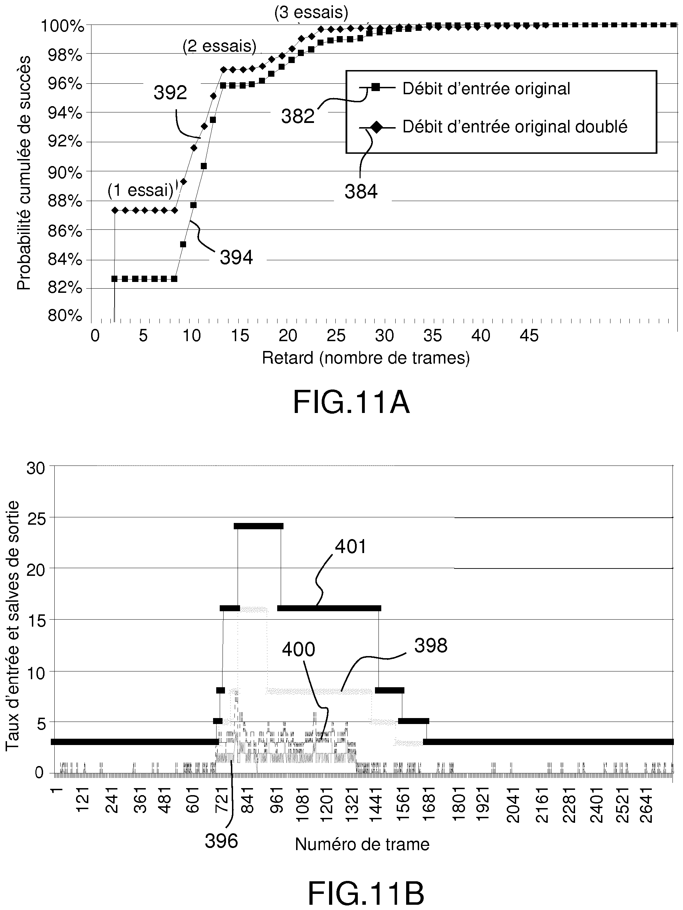

.- les Figures 11A et 11B sont respectivement une première vue de l'évolution de la probabilité cumulée de succès de transfert d'une salve quelconque en fonction du temps de transfert de la salve pour un débit d'entrée de référence d'une salve par terminal TE et un débit d'entrée double du débit d'entrée de référence, et une deuxième vue représentative de l'évolution temporelle de capacité de sortie du canal RACH selon l'invention en réponse à deux profils de taux d'entrée associés respectivement au débit d'entrée de référence et au débit de référence doublé utilisés dans la première vue ;

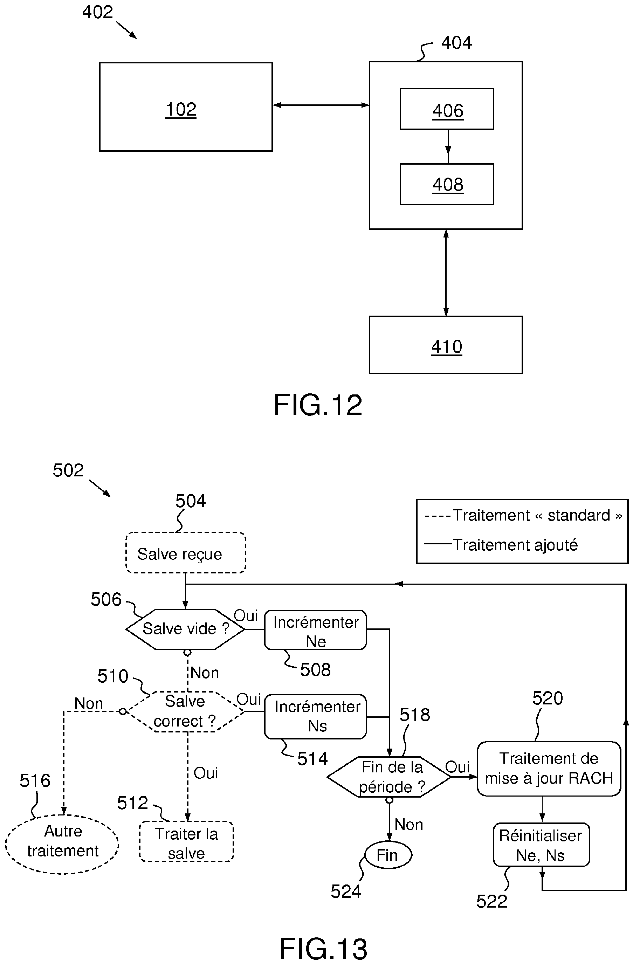

.- la Figure 12 est un ordinogramme d'un procédé de transmissions de paquets de données sur un canal de transmission à contention, utilisant le procédé d'adaptation dynamique de la Figure 2, un procédé de contrôle de flux et de manière facultative un procédé de contrôle de congestion, couplés au procédé d'adaptation dynamique de la capacité du canal RACH ;

.- la Figure 13 est un ordinogramme d'une première partie du traitement mis en oeuvre par l'unité de traitement de la passerelle GW permettant de réaliser le procédé d'adaptation dynamique de la capacité de la Figure 2 et le procédé de transmission de la Figure 12 incluant le mécanisme de contrôle de flux ;

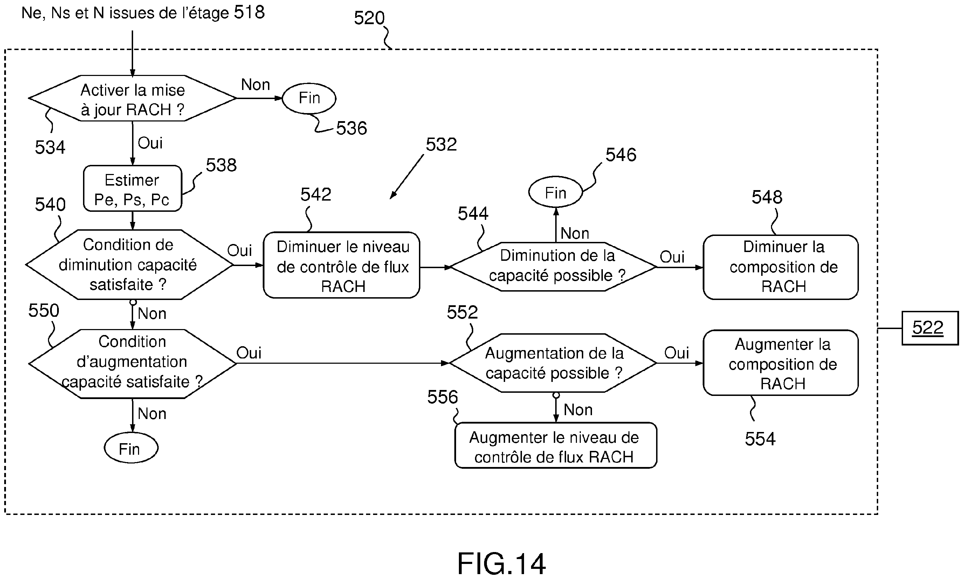

.- la Figure 14 est un ordinogramme d'une deuxième partie du traitement mis en oeuvre par l'unité de traitement de la passerelle GW, la deuxième partie décrivant de manière détaillée les deux dernières étapes de la première partie de la Figure 13 ainsi que le couplage de la mise à jour de la capacité et la mise en place du contrôle de flux ;

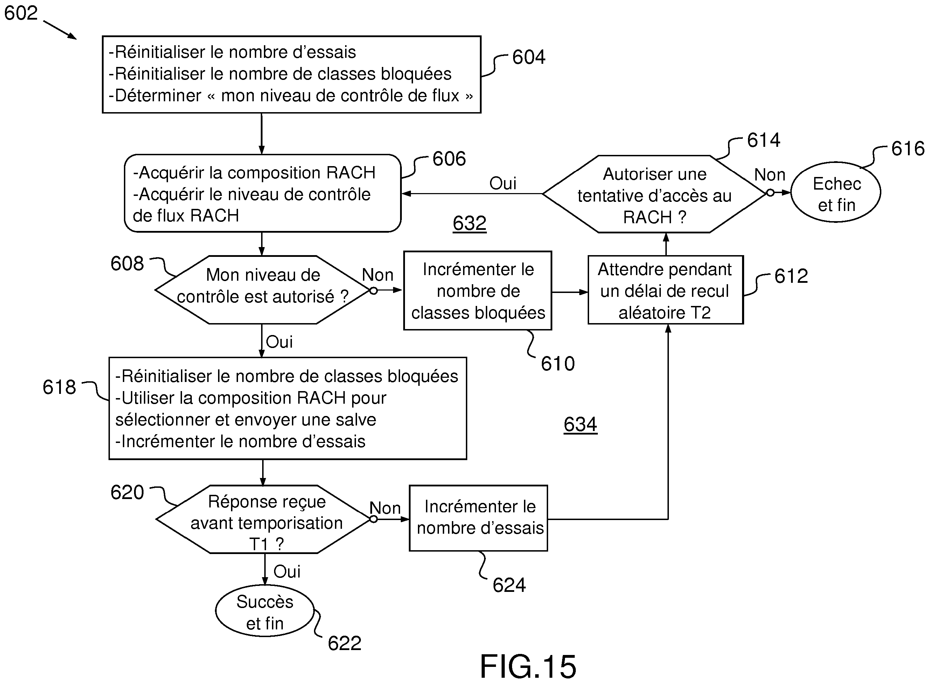

. la Figure 15 est un exemple d'ordinogramme du traitement mis en oeuvre par l'unité de traitement d'un terminal utilisateur TE permettant de réaliser le procédé d'adaptation dynamique de la capacité de la Figure 2 et le procédé de transmission de la Figure 12, le mécanisme de contrôle de flux y compris ainsi que le mécanisme de contrôle de congestion.

L'invention est décrite ci-dessous en référence à un système de communications par satellite dans lequel une pluralité d'utilisateurs, chacun disposant d'un équipement terminal propre TE (en anglais Terminal Equipment), sont reliés par l'intermédiaire d'un satellite « transparent » (en anglais « bent pipe ») à faisceaux multiples à des passerelles GW (en anglais « gateways ») permettant l'accès à un réseau terrestre. Cela ne limite pas la portée de l'invention qui peut s'appliquer à différents systèmes de communications utilisant, par exemple, des satellites régénérateurs et/ou des connexions sans fils terrestres, voir même des connexions par câble.

Suivant la Figure 1, un système de communications par satellite 2, configuré pour mettre en oeuvre l'invention, comprend un nombre n de terminaux utilisateurs terrestres $TE_1$, $TE_2$, ....$TE_n$, seuls trois terminaux 4, 6, 8 correspondant aux désignations respectives $TE_1$, $TE_2$, $TE_n$ étant représentés sur la Figure 1 par souci de simplicité, une passerelle de connexion 12 à un deuxième réseau 14 comme par exemple le réseau Internet, et un satellite 16 SAT.

Le satellite 16 comporte une charge utile 18 transparente qui sert de relais entre les terminaux 2, 4, 6 et la passerelle de connexion 12 GW. Les terminaux 4, 6, 8 sont chacun configurés pour émettre sous la forme de salves des paquets de données ou des fragments de paquets jusqu'à la passerelle de connexion GW au travers d'un canal de transmission à contention 20, désigné par RACH (en anglais Random Access Channel) et formant une voie montante 22 décomposée en une première liaison montante 24 depuis les terminaux 4, 6, 8 jusqu'au satellite 16 et une deuxième liaison montante 26 depuis le satellite 16 jusqu'à la passerelle de connexion 12.

La passerelle de connexion est configurée pour recevoir et démoduler à l'aide d'un récepteur de passerelle 30 les salves des paquets de données ou des fragments de paquets émis par les terminaux 4, 6, 8 sur le canal RACH de transmission de voie montante à contention 20 partagé par les terminaux 4, 6, 8.

La passerelle de connexion 12 GW est configurée également pour adapter dynamiquement la capacité dudit canal RACH 20 de transmission de voie montante à contention en fonction d'un trafic de terminaux entrants sporadique non prédictible. Cette adaptation dynamique de la capacité est réalisée par des étapes de traitement, exécutées par une unité de traitement de passerelle 32, et en notifiant de manière régulière et continue à l'ensemble des terminaux 4, 6, 8 la composition du canal RACH au travers d'une voie descendante 34 de retour de signalisation exigeant une faible capacité.

Les notifications régulières et en continu doivent être interprétées comme des envois d'informations concernant la composition mise à jour du canal RACH suivant une période inférieure à la seconde, typiquement de l'ordre de quelques centaines de millisecondes, de façon à réduire le temps total nécessaire à la procédure d'acquisition par les terminaux.

La voie descendante 34 se décompose en une première liaison descendante 36 depuis la station de connexion 12 jusqu'au satellite 16 et une deuxième liaison descendante 38 depuis le satellite 16 jusqu'aux terminaux 4, 6 et 8.

Lorsque des classes de terminaux sont définies, un mécanisme de contrôle de flux peut être mis en oeuvre par la notification régulière et continue, à l'ensemble des terminaux 4, 6, 8 et en supplément de la composition, d'une liste mise jour des classes de terminaux autorisées à émettre par la passerelle GW.

Chaque terminal 4, 6 et 8 comprend un émetteur/récepteur 40 et une unité de traitement de terminal 42, configurés pour recevoir les informations de gestion du canal RACH 20 de transmission à contention envoyées par la station de connexion 12 sur la voie descendante 34 de retour de signalisation, et exploiter ces informations pour utiliser rapidement des ressources de transmission actuelles du canal RACH adaptées en volume à la demande actuelle instantanée de trafic.

En variante et en supplément d'un mécanisme optionnel de contrôle de flux couplé au procédé d'adaptation dynamique de la capacité du canal de transmission 20 RACH, les terminaux 4, 6, 8 sont configurés pour mettre en oeuvre un mécanisme de contrôle de congestion du canal dans lequel l'étalement des délais de retransmission des terminaux autorisés à émettre est une fonction croissante prédéterminée d'un niveau de contrôle de flux représentatif du degré de congestion du canal.

Par la suite, la charge externe du canal RACH et la charge interne du canal RACH seront distinguées en utilisant les définitions suivantes.

La charge externe du canal RACH est définie comme le taux de nouveaux terminaux entrants transmettant une salve sur le canal à contention RACH. Par exemple, une charge externe de 10% signifie qu'il y a dix fois plus de ressources disponibles en termes de salves (ou unité logique de trame) que de nouveaux terminaux entrant en moyenne par unité de temps. Une charge de 100% signifie qu'il y a autant de ressources disponibles en termes de segments temporels d'une trame logique que de nouveaux terminaux entrants en moyenne par unité de temps.

La charge interne du canal RACH est définie comme le taux total de transmissions de salves sur le canal à contention qui inclut les nouveaux terminaux entrants et les retransmissions en cours en raison de collision(s) ou d'une mauvaise réception de la salve (taux d'erreur classique).

Suivant la Figure 2, un procédé 102 d'adaptation dynamique de la capacité du canal de transmission à contention RACH 20 est illustré. Le canal à contention RACH 20 utilise un protocole d'accès aléatoire prédéterminé, est partagé par une pluralité de terminaux 4, 6, 8 formant un premier réseau, et il emprunte la voie montante 22 depuis les terminaux 4, 6, 8 vers la passerelle de connexion 12. Le procédé 102 comprend un ensemble d'étapes.

Dans une première étape 104, une valeur d'une charge externe souhaitée en tant que point de fonctionnement nominal du canal est fixée, la charge externe réelle du canal étant égale au taux actuel de nouveaux terminaux entrants émettant une salve respective de données par unité de temps sur le canal 20. Typiquement, la valeur de cette charge externe est fixée à 20% ou 25% pour un canal à contention tramé classique de type SA (en anglais « Slotted ALOHA ») ou à une valeur supérieure à 25% selon les performances de la méthode ou protocole d'accès utilisé. Par exemple pour une méthode d'accès CRDSA la valeur est fixée proche de 50% et pour une méthode d'accès SA-CE (en anglais « Slotted ALOHA - Capture Effect) la valeur est fixée proche de 40%. Il est à remarquer que la charge « externe » correspond à la charge générée par les nouveaux terminaux entrants uniquement dans le réseau en excluant les retransmissions. Le point de fonctionnement du canal RACH dépend directement du mode tramé ou non tramé, et du nombre maximum de retransmissions K qui est déjà connu comme un paramètre du premier réseau de terminaux 4, 6, 8 TE.

Puis dans une deuxième étape 106, à l'aide d'un modèle mathématique ou d'une simulation, un premier seuil supérieur $S_H$ et un deuxième seuil inférieur $S_L$ d'une grandeur Gr sensible de manière monotone à la charge externe du canal à contention sont déterminées. Des charges externes du canal à contention supérieure et inférieure théoriques correspondent respectivement au premier seuil supérieur $S_H$ ou deuxième seuil inférieur $S_L$; la grandeur sensible Gr qui est ici théorique, dépend d'une première probabilité de réception d'une salve attendue vide Pe, ou d'une paire de probabilités formée par la première probabilité Pe et d'une deuxième probabilité de réception réussie d'une salve Ps, ou d'une troisième probabilité Pc de réception d'une salve ayant subi une collision Pc, et du type et de paramètres définissant le protocole d'accès à contention.

Puis dans une troisième étape 108, l'unité de traitement 30 de la passerelle de connexion 12 GW estime en continu sur une fenêtre d'observation de largeur prédéfinie, et à partir de mesures en réception dans ladite fenêtre d'observation des salves attendues, une première probabilité mesurée de réception d'une salve attendue vide Pe, ou une paire de probabilités mesurées formée par la première probabilité mesurée Pe et une deuxième probabilité mesurée de réception réussie d'une salve Ps, ou une troisième probabilité mesurée de réception d'une salve ayant subi une collision Pc.

Il est à remarquer qu'une probabilité mesurée d'une salve ayant subi une collision $P_c$ peut être déduite de la paire des probabilités mesurées Pe et Ps à partir de la relation Pc=1-(Pe +Ps) et que ces probabilités dépendent du nombre maximum de retransmissions K.

Ensuite dans une quatrième étape 110, une grandeur sensible mesurée actuelle $Gr_m$ correspondant à la grandeur sensible théorique Gr de la deuxième étape 106 est déterminée en fonction d'une des probabilités mesurée Pe et Pc ou des deux probabilités mesurées Pe et Ps.

Puis dans une cinquième étape 112, l'une des décisions suivantes est prise.

Suivant une première décision, lorsqu'un franchissement du premier seuil supérieur $S_H$ par la grandeur sensible actuelle $Gr_m$ a lieu une fois ou plusieurs fois consécutives en s'éloignant de la valeur de la grandeur correspondant à la charge externe nominale, la passerelle de connexion 12 augmente la capacité actuelle du canal de transmission RACH en libérant des ressources de communication supplémentaires en termes de fréquences supplémentaires et/ou de codes, et en informant par la voie retour tous les terminaux 4, 6, 8 de la nouvelle composition du canal de transmission RACH à capacité augmentée.

Suivant une deuxième décision, lorsqu'un franchissement du deuxième seuil inférieur $S_L$ par la grandeur sensible actuelle $Gr_m$ a lieu une fois ou plusieurs fois consécutives en s'éloignant de la valeur de la grandeur correspondant à la charge externe nominale, la passerelle de connexion 12 diminue la capacité actuelle du canal de transmission en retirant des ressources de communication en termes de fréquences et/ou de codes parmi les ressources de transmission mis actuellement à disposition et en informant par la voie retour tous les terminaux de la nouvelle composition du canal de transmission à capacité diminuée.

De manière particulière et dans le cas où un couplage existe entre le canal RACH à contention et un canal en mode DAMA (en anglais « Demand Assigned Multiple Access »), la capacité du canal SA ou d'un de ses dérivés est augmentée tandis que la capacité utilisée en mode DAMA « Demand Assignment Multiple Access » est réduite d'autant si celle ci peut être réduite à cet instant sans perdre pour autant la qualité de service requise par les usagers ayant déjà une session établie. Inversement lors du franchissement du seuil bas $S_L$ de la charge, l'opération inverse est réalisée en augmentant la capacité du canal en mode DAMA et en diminuant d'autant la capacité du canal en mode de contention.

Le premier seuil supérieur $S_H$ et le deuxième seuil inférieur $S_L$ de la grandeur sensible sont déterminés à partir d'un modèle représentatif du protocole utilisé par le canal à contention de sorte à :

.- minimiser les erreurs de décisions de changement de capacité, et

.- stabiliser les décisions de changement de capacité, et

.- assurer une bonne réactivité temporelle de changement, et

.- optimiser les performances du canal pour éviter un écroulement du canal en raison d'un trop grand nombre de collisions.

Au cours de la troisième étape 108, l'estimation des probabilités Pe, Ps et éventuellement Pc est faite par filtrage sur une petite période temporelle d'observation afin de réduire les grandes amplitudes du « bruit » de fluctuations de ces probabilités instantanées et d'avoir une réactivité adaptée au besoin utilisateur tout en limitant les prises de décisions de modifications de la composition du canal.

Un filtrage par une simple moyenne glissante MA (en anglais « Moving Average ») de courte longueur (typiquement une dizaine de trames) est suffisant pour obtenir de bons résultats et une stabilité correcte. En variante, des filtrages à prédiction plus sophistiquée peuvent être utilisés. De manière générale, tout filtrage stable de courte longueur convient.

Le procédé 102 d'adaptation dynamique de la capacité du canal RACH comprend en outre une étape d'initialisation 114 au cours de laquelle à un instant initial ou de démarrage du procédé, la capacité actuelle C du canal de transmission est mise à une valeur de capacité initiale $C_0$.

La capacité initiale $C_0$ est une capacité moyenne, fixée arbitrairement et au minimum égale à une salve toutes les N trames entières, correspondant à la capacité minimale requise pour au moins démarrer (en anglais « boot ») le réseau et permettre l'amorçage des accès au réseau des premiers utilisateurs. Puis, la capacité du canal RACH est adaptée dynamiquement en quasi-temps réel selon les estimations des probabilités mesurées Pe, Ps et Pc.

Le protocole d'accès à contention utilisé par le canal est compris par exemple dans l'ensemble formé par le protocole ALOHA à segmentation temporelle ou tramée (en anglais Slotted ALOHA) et ses dérivés combinant l'effet de capture CE (en anglais Capture Effect) et/ou l'effet d'utilisation d'une diversité (temporelle ou fréquentielle) et d'une résolution des conflits d'accès CRD (en anglais Contention Resolution Diversity).

Suivant la Figure 3, un diagramme temporel décrit une séquence 152 typique de signaux traités et échangés entre un terminal utilisateur quelconque 4, 6, 8 du premier réseau, désigné par TE, et la passerelle de connexion 12, désigné par GW. Cette séquence 152 est observée lors de l'établissement d'une communication et/ou lors d'une communication établie entre le terminal utilisateur TE et la passerelle de connexion GW, et cette séquence 152 concerne plus particulièrement les échanges et traitements permettant la mise en oeuvre du procédé d'adaptation dynamique 102 de l'invention décrit dans la Figure 2.

Dans une première phase 154, la passerelle 12 envoie aux terminaux 4, 6, 8 du réseau sur un canal de signalisation SIG-CH de la voie descendante 34 de l'interface sans fil GW-TE la composition du canal RACH en termes de ressources de transmission utilisables et le cas échéant des informations de contrôle de gestion sous la forme des classes de terminaux utilisables.

Le terminal TE extrait 156 les informations de signalisation et en supposant qu'il est autorisé à émettre envoie 158 à la passerelle GW des données d'usage du canal RACH sur une ressource de transmission actuellement disponible du canal RACH.

Dans une deuxième phase 160 postérieure à la première phase 154, la passerelle GW exploite l'estimation en temps réel des probabilités Pe, Ps et Pc et met à jour les informations de la composition actuelle en ressources du canal et/ou les informations de contrôle de flux. Ici, la deuxième phase 160 est postérieure à la réception des données d'usage de l'envoi 158. Puis, la passerelle GW notifie 162 ces informations de mise à jour aux terminaux en les envoyant sur le canal SIG-CH.

Le terminal TE extrait 164 les informations de signalisation et, en supposant qu'il est autorisé à émettre, envoie une ou plusieurs fois 166 sans succès à la réception à la passerelle GW des mêmes données d'usage du canal RACH en utilisant une ou plusieurs des ressources de transmission actuellement disponibles du canal RACH, le ou les échecs à la réception étant imputables à des collisions de salves. Le terminal TE parvient finalement a envoyer avec succès 168 les données d'usage du canal RACH en utilisant une ressource de transmission actuellement disponible du canal RACH et telle qu'autorisé dans la deuxième phase 160.

Dans une troisième phase 170, postérieure à la deuxième phase 160, la passerelle GW exploite l'estimation en temps réel des probabilités Pe, Ps et Pc et met à jour les informations de la composition actuelle en ressources du canal et/ou les informations de contrôle de flux. Ici, la deuxième phase 170 est postérieure à des réceptions d'envoi(s) ayant échoué 166 de données d'usage sur le canal RACH et antérieure la réception réussie de l'envoi 168 sur le canal RACH des mêmes données d'usage du canal RACH par le terminal.

Puis, la passerelle GW notifie 172 les informations mises à jour aux terminaux en les envoyant sur le canal de signalisation SIG-CH de voie retour.

Les figures 4A et 4B rappellent respectivement l'évolution théorique de la probabilité de réception réussie d'une salve Ps en fonction de la charge externe normalisée du canal RACH pour différentes valeurs du nombre maximal de retransmissions K variant de 1 à 5 (respectivement courbes 204, 206, 208, 210, 212, 214) et les évolutions théoriques 222 de la probabilité de réception réussie d'une salve Ps (courbe 224), de la probabilité de réception d'une salve attendue et vide Pe (courbe 226), de la probabilité de collision d'une salve attendue Pc (courbe 228) en fonction de la charge externe normalisée du canal RACH pour un nombre maximal de retransmissions K égal à 5 lorsque le protocole utilisé est de type tramé (Slotted ALOHA) ;

La figure 4A met en évidence pour la courbe 214 (ou courbe désignée par Ps(5) correspondant à un nombre maximal de retransmissions K égal à 4) une zone peu ou non chargée 232 du système, puis l'écroulement 234 du canal RACH sur excès de collisions juste après son efficacité maximale d'environ 36% avec une charge externe maximale de 37%, et une zone de surcharge 236.

La courbe 204, désignée par Ps(0) et correspondant à K égal à zéro, montre le cas classique d'une efficacité d'environ 36% pour une charge externe normalisée de 100% sans retransmission.

Suivant ces courbes 204, 206, 208, 210, 212, 214, une ambiguïté existe concernant la détermination de la charge externe en fonction de la probabilité de succès Ps seule. Par exemple en considérant la courbe 214, à une même probabilité de succès Ps(5) égale à 18 % correspond deux points de charge externe normalisée RACH 242, 244, situés de part et d'autre du point d'écroulement 234 du canal.

L'exploitation d'une des probabilités Pe, Pc de salve vide ou de salve ayant subi une ou plusieurs collisions permet de lever cette ambiguïté pour adapter la capacité du canal RACH car l'évolution de ces probabilités est monotone comme illustré sur la Figure 4B. A une valeur de probabilité Pe de la courbe 226 ou Pe(5) correspond une valeur unique et différente de la charge externe normalisée du canal RACH et à chaque valeur de la charge externe normalisée variant de 0% à 100% est associée une valeur unique et différente de la probabilité Pe. De même, à une valeur de probabilité Pc de la courbe 228 ou Pc(5) correspond une valeur unique et différente de la charge externe normalisée du canal RACH et à chaque valeur de la charge externe normalisée variant de 0% à 100% est associée une valeur unique et différente de la probabilité Pc.

Suivant les Figures 5 et 6, des paramètres pertinents de seuil $S_H$, $S_L$ régissant la décision d'augmenter (en anglais « upgrade ») ou de diminuer (en anglais « downgrade ») la capacité externe du canal RACH autour d'un point de fonctionnement nominal du canal RACH sont illustrés lorsque ce canal est un canal de type SA et le nombre maximal de retransmissions K est égal à 5.

Ces paramètres de seuil pertinents sont fonction sur la Figure 5 des probabilités Pe et Pc, décrites dans la Figure 4, qui constituent comme observé des grandeurs mesurables en temps réel ou quasi-réel, représentative de manière non ambiguë et suffisamment sensible de la charge externe du canal RACH.

Suivant la Figure 5 et à titre d'exemple, le point de fonctionnement nominal considéré pour la charge nominale externe normalisée est fixée arbitrairement à 25%, ce qui en d'autres termes signifie que le canal a une capacité ou dispose d'une quantité de ressources de transmission quatre fois supérieure au débit ou taux d'entrants, sans compter les retransmissions possibles, au plus cinq fois ici.

Dans ce cas, les probabilités a priori ou théoriques de Pe et Pc sont respectivement d'environ 70% et 5% pour la charge externe normalisée nominale considérée de 25%.

Suivant un premier mode de réalisation, la décision d'adapter la capacité du canal RACH est fondée sur l'évolution de la probabilité Pe de réception d'une salve vide telle que décrite par la courbe 226. Une augmentation de capacité du canal RACH est décidée sur franchissement d'un premier seuil supérieur 232 $S_H(Pe)$ égal à 60%, qui correspond à une première charge externe normalisée supérieure du canal RACH égale à 30%, avant écroulement du canal. Une réduction de capacité du canal est décidée sur franchissement d'un deuxième seuil inférieur 234 $S_L(Pe)$ égal à 83%, qui correspond à une deuxième charge externe normalisée supérieure du canal RACH égale à 15%.

Suivant un deuxième mode de réalisation, la décision d'adapter la capacité du canal RACH est fondée sur l'évolution de la probabilité Pc de réception d'une salve vide telle que décrite par la courbe 228. Une augmentation de la capacité du canal RACH est décidée sur franchissement d'un premier seuil supérieur 242 $S_H(Pc)$ égal à 8,5%, qui correspond à une première charge externe normalisée supérieure du canal RACH égale à 30%, avant écroulement du canal. Une réduction de capacité du canal RACH est décidée sur franchissement d'un deuxième seuil inférieur 244 $S_L(P_C)$ égal à 1,5%, qui correspond à une deuxième charge externe normalisée supérieure du canal égale à 15%.

Suivant un troisième mode de réalisation et la Figure 6, les paramètres de seuil pertinents sont fonction d'une estimation de la charge externe G qui est calculée en fonction de la probabilité Pe de réception d'une salve vide Pe et du nombre maximum de retransmissions K suivant la relation :

$$ G = -P_e * Ln(P_e)/[1 - (1 - P_e)^{K+1}] $$

Cette relation est valide pour un canal à contention tramée de type SA dès que la population d'utilisateurs susceptibles sur un long terme d'utiliser le canal RACH est suffisamment grande, c'est-à-dire supérieure ou égal à 20, ce qui est toujours le cas en pratique, la population d'utilisateurs sur le long terme ne devant pas être confondue avec la population d'utilisateurs qui utilisent le canal RACH à un instant donné.

Dans le cas d'une surcharge du canal pour laquelle Pe tend vers zéro et G tend théoriquement vers l'infini, la charge externe estimée est écrêtée à 1. De manière avantageuse, lorsque le troisième mode de réalisation est mis en oeuvre, les trois informations Pe, Ps et Pc sont implicitement utilisées dans l'estimateur en raison du fait que le terme (1 - Pe) dans le dénominateur de l'expression de G est égal à Ps+Pc.

Suivant la Figure 6, l'effet du nombre maximal de retransmissions K, représenté au travers des diverses courbes d'évolution 252, 254, 256, 258, 260, 262 correspondant respectivement à des valeurs de K variant de 1 à 5, devient négligeable autour des points décisions 272, 274, choisis ici de manière analogues à ceux des courbes 226 et 228 de la Figure 4, lorsque K est supérieur ou égal à 3, ce qui est très généralement le cas en pratique.

Suivant le troisième mode de réalisation, la décision d'adapter la capacité du canal RACH une augmentation de la capacité du canal RACH est décidée sur franchissement du point de décision 272 formant un premier seuil supérieur $S_H(G)$, égal à 30% et identique à la première charge externe normalisée supérieure du canal RACH égale à 30%, avant écroulement du canal. Une réduction de capacité du canal RACH est décidée sur franchissement du point de décision 274 formant un deuxième seuil inférieur 244 $S_L(G)$, égal à 15% et identique à la deuxième charge externe normalisée supérieure du canal égale à 15%.

De manière supplémentaire et indépendamment du mode de réalisation choisi du procédé d'adaptation dynamique de la capacité du canal RACH une décision $D_{up}$ est prise d'augmenter la capacité du canal lorsque le franchissement du premier seuil supérieur $S_H$ par en dessus a eu lieu un premier nombre Nup de fois consécutives, et/ou une décision $D_{down}$ est prise de diminuer la capacité du canal lorsque le franchissement du deuxième seuil inférieur $S_L$ a eu lieu un deuxième nombre $N_{down}$ de fois consécutives par en dessus.

Le premier nombre $N_{up}$ est le plus petit nombre entier supérieur ou égal à deux tel que : $(1 - D_{up})^{N_{up}} \leq P_{up\_res}$ où $D_{up}$ désigne la probabilité d'une bonne décision lorsque le seuil supérieur a été franchi par en dessous une fois et $P_{up\_res}$ une probabilité résiduelle de mauvaise décision prédéterminé.

Le deuxième nombre $N_{down}$ étant le plus petit nombre entier supérieur ou égal à deux tel que : $(1 - D_{down})^{N_{down}} \leq P_{down\_res}$ où $D_{down}$ désigne la probabilité d'une bonne décision lorsque le seuil inférieur a été franchi par en dessus une fois et $P_{down\_res}$ une probabilité résiduelle de mauvaise décision prédéterminé.

Ceci permet de réduire les erreurs de décisions dues aux grandes variations instantanées des estimateurs avec une probabilité résiduelle de mauvaise décision prédéterminé. Les probabilités résiduelles $P_{up\_res}$ et $P_{down\_res}$ peuvent être choisies égales de manière particulière.

Le deuxième nombre de franchissements consécutifs $N_{down}$ est nettement supérieur ou égal au premier nombre de franchissements consécutifs $N_{up}$ dans un rapport $N_{down}/N_{up}$ supérieur ou égal à 5, de préférence supérieur ou égal à 10.

Par exemple, une augmentation de la capacité du canal RACH sur franchissement du seuil un nombre $N_{up}$ de fois consécutives supérieur à trois, c'est-à-dire pendant une durée de trois trames. Dans le cas d'une diminution de la capacité, le nombre de fois consécutives $N_{down}$ de trames logiques est par exemple supérieur ou égal à 30, ce qui permet de maintenir la capacité actuelle ou courante pour absorber un éventuel pic ultérieur de trafic. La valeur du nombre $N_{down}$ doit être cohérente avec la durée de la fenêtre d'observation, typiquement au moins deux fois la durée de cette fenêtre.

Les valeurs $N_{up}$ et $N_{down}$ permettent de stabiliser la prise de décision de modifier la capacité actuelle du canal et imposer la contrainte de $N_{up}$ grand devant $N_{down}$ garantit une bonne réactivité du procédé d'adaptation lors d'un accroissement de capacité requise et une baisse de capacité progressive lorsqu'une diminution de capacité est décidée.

Dans tous les cas, la mise à jour de la capacité tendra à la maintenir autour de la charge externe nominale qui a été fixée. Il est à remarquer que généralement le nombre maximum de retransmissions K est inférieur ou égal à 5, ce qui limite la surcharge créé par les collisions et limite les temps de réponses en dépit d'une baisse de la performance système en termes de taux de succès.

En résumé les deux seuils de décision sont choisis suffisamment distants l'un de l'autre autour du point de fonctionnement nominal de sorte à minimiser les erreurs de décisions de changement de capacité externe, stabiliser les décisions de changement de ladite capacité, assurer une bonne réactivité temporelle de changement de capacité (montée rapide, descente plus lente), et éviter un écroulement du canal en raison d'un trop grand nombre de collisions

Les premier et deuxième seuils de décision ainsi que entiers de stabilisation des décisions $N_{up}$ et $N_{down}$ sont des nouveaux paramètres système implémentés dans l'unité de traitement de la passerelle GW.

Les valeurs des seuils sont déterminés à partir d'un modèle mathématique validé par simulation ou uniquement issue de simulations dépendant du paramétrage système (par exemple nombre maximum d'itérations en mode CRDSA, classes des puissances en mode CE, etc.) et ces valeurs de seuils dépendent du mode tramé ou non tramé et du nombre maximum de retransmissions K.

Suivant la Figure 7, une table configurable 282, implémentée dans la passerelle GW est configurée de sorte à ce que l'augmentation et/ou la décroissance décidée de la capacité externe du canal est effectuée en suivant de manière progressive un même profil de croissance et décroissance de la capacité par palier ou degré.

La table 282 est utilisée pour la mise à jour de la capacité externe C sur franchissement de seuils de décisions. Les valeurs de la taille de cette table et les valeurs de capacités décrites dans la Figure 7 sont fournies à titre d'exemple ici.

Un indice de décision courant $I_D$ est incrémenté à chaque prise de décision d'augmentation de la capacité et est décrémenté à chaque prise de décision de diminution de la capacité en restant dans la plage de cette table ; et une valeur de capacité actuelle notifiée, exprimée en nombre de salves par période, est associée à chaque valeur de l'indice de décision décrit dans la table 282. De manière générale, la période est égale à un nombre entier fixé de fois la durée d'une trame logique. Par exemple, la durée de la période est égale à la durée d'une trame logique.

Ce mécanisme d'exécution effective des décisions de modification de la capacité externe permet d'avoir une granularité adaptée au trafic entrant en garantissant une bonne stabilité de la mise à jour de la capacité externe du canal sur prise de décision pour éviter des oscillations ou fluctuations trop rapide tout en suivant l'enveloppe du pic de trafic en entrée.

Par exemple, une décision de passage de la capacité externe de 3 à 5 puis de 5 à 8 salves / trame puis une décision de passage de 8 à 5 puis de 5 à 3 pourra être exécutée. Mais l'exécution d'une séquence de capacité du type 3, 8, 16, 3 ne sera pas possible selon la table 282 car cette séquence peut engendrer une instabilité et des changements de capacité trop fréquents.

S'agissant de la fiabilité de la décision, les premier, deuxième, troisième modes de réalisation décrits ci-dessus sont sélectionnées par ordre de priorité avec avantages et inconvénients en fonction du protocole utilisé par le canal RACH.

Dans le cas d'un canal de type SA, mode le plus répandu, le troisième mode de réalisation est préféré car il permet une stabilité du calcul de la charge externe en entrée G du fait que les trois informations des probabilités estimées Pe, Ps et Pc sont utilisées et ne nécessitent pas d'abaques ou une fonction de transformation pour obtenir les valeurs des seuils haut et bas. Il permet également une simplification opérationnelle nécessitant uniquement la donnée d'un point de fonctionnement système (une capacité externe normalisée d'entrée R de 25% par exemple), un premier seuil haut (+10% au dessus de R par exemple sur augmentation) et un deuxième seuil bas (-20% en dessous de R par exemple sur diminution).

Toutefois, il est à remarquer que le troisième mode de réalisation requiert le calcul des fonctions Ln(x) et puissance(x) dont le temps CPU peut être considéré comme important si ce calcul est effectué à bord d'un satellite par exemple. Ce temps de calcul peut être annulé en utilisant des tables pré-calculées au détriment d'une petite perte de précision selon la taille de ces tables qui sont respectivement indexées par Pe et, (1 - Pe) pour chaque valeur de K.

Dans tous les autres cas de type de canal à contention, le deuxième mode de réalisation, puis le premier mode de réalisation sont préférés.

La mesure de collisions, effectuée dans le deuxième mode de réalisation, reflète la charge de collision effective et nécessite deux filtrages (estimations de Pe et Ps pour en déduire Pc) tandis que le premier mode de réalisation, équivalent fonctionnellement en terme de probabilité, ne reflète pas le taux de collision tout en nécessitant qu'une seule information filtrée Pe.

Les premier et deuxième modes de réalisation nécessitent chacun sur le plan opérationnel une abaque donnant les probabilités des premier et deuxième seuils issues de résultats de simulations pour les prises de décisions d'augmentation et de diminution de la capacité en fonction du nombre de retransmissions et d'autres paramètres directement liés au type et aux performances du mode d'accès (CRDSA, CE, etc.).

Le procédé d'adaptation dynamique de la capacité d'un canal à contention utilisant un protocole prédéterminé tel que décrit ci-dessus permet une adaptation rapide et quasi-instantanée de la capacité du canal RACH avec un temps de réponse inférieur à la seconde. Un temps de réponse typique est un temps équivalent à un certain nombre N de trames consécutives, supérieur ou égal à la somme de la période d'observation $T_{obs}$ et du temps équivalent au premier nombre $N_{up}$ de trames consécutives, étant considéré que la durée d'une trame est petite, par exemple typiquement égale à 26,5 ms lorsqu'un protocole de diffusion par satellite de vidéo numérique tel que DVB-RCS est utilisé.

De manière générale, le procédé d'adaptation dynamique selon l'invention est fondé sur une mesure en continu de la charge externe du canal RACH. Le procédé d'adaptation dynamique selon l'invention est complémenté par une régulation de flux des terminaux dans le cas où cette capacité ne peut pas être allouée totalement pour répondre à la demande de trafic.

Le procédé d'adaptation dynamique de la capacité d'un canal RACH selon l'invention, complété le cas échéant par un mécanisme de contrôle de flux, permet de répondre efficacement et en particulier à une demande de trafic dense, sporadique et non prédictible indépendamment de la variante du mode utilisé (tramé ou non, CE, CRDSA, etc.).

Le procédé d'adaptation dynamique permet de rendre totalement flexible le plan d'attribution des ressources de transmission du canal RACH selon la dimension temporelle et d'autres dimensions comme la fréquence, la séquence d'étalement.

Suivant les Figures 8A et 8B, un exemple simulé de réponse du canal RACH à un pic de trafic de demandes d'entrée, sporadique et non prédictif est illustré lorsque le procédé d'adaptation dynamique selon l'invention est mis en oeuvre.

Suivant la Figure 8A, une première courbe 292 représente l'évolution en temps réel de la capacité externe du canal en terme de nombre de salves de sortie utilisées par trame, le temps courant étant représenté par le numéro d'une trame correspondante qui est incrémenté unitairement en fonction du nombre de trames passées. Une deuxième courbe 294 représente l'évolution temporelle du trafic d'entrée en termes de taux de nouveaux entrants, cette évolution 294 comportant un pic 296 de demandes d'entrée dans le réseau ou d'accès sur le canal RACH. La Figure 8A met bien en évidence une adaptation rapide quasiment en temps réel et une stabilité du nombre de ressources de communications demandée pour maintenir une charge externe

Suivant la Figure 8B, une première courbe 302 représente l'évolution temporelle en continue de la première probabilité simulée de réception d'une salve vide Pe, le temps courant étant représenté à l'instar de la Figure 8A par un numéro courant de trame. Une deuxième courbe 304 représente l'évolution temporelle en continu de la deuxième probabilité simulée de réception réussie d'une salve, et une troisième courbe 306 représente l'évolution temporelle en continue de la troisième probabilité simulée de réception d'une salve ayant subi une collision Pc. Une quatrième courbe 308 représente l'évolution temporelle de la charge externe simulée du canal RACH. La Figure 8B montre bien la stabilité des probabilités Pe, Ps, Pc sur l'adaptation du canal et la convergence de la charge externe autour du point de fonctionnement nominal fixé dans la première étape et ici à 25%.

Suivant les Figures 9A, 9B et 9C, les performances de trois modes d'adaptation du canal en termes de taux d'échecs et de réussite d'accès et de temps de réponse sont comparés lorsque le canal RACH est soumis à un trafic d'entrée ayant le même profil que le profil d'entrée 296 de la Figure 8A. Un premier mode 312 met en oeuvre le procédé d'adaptation dynamique du canal dans lequel la composition du canal RACH est mise à jour et notifiée de manière continue aux terminaux au travers d'un canal retour de signalisation commun de voie descendante. Un deuxième mode 314 met en oeuvre un procédé statique dans lequel la capacité externe du canal RACH est fixée à trois salves par trame et le mécanisme de contrôle de flux est activé. Un troisième mode 316 met en oeuvre un procédé statique dans lequel la capacité externe du canal RACH est fixée à trois salves par trame et le mécanisme de contrôle de flux est désactivé.

Suivant la Figure 9A, des première, deuxième, troisième courbes 322, 324, 326 représentent respectivement l'évolution temporelle du taux d'échec des nouveaux entrants des premier, deuxième, troisième modes 312, 314, 316. La Figure 9A met en évidence que le taux d'échecs instantané varie selon la possibilité d'adapter la capacité externe du canal RACH et que ce taux est nul lorsque le canal RACH utilise le procédé d'adaptation dynamique du canal selon l'invention, c'est-à-dire se trouve dans le premier mode 312. En outre, l'influence d'un couplage avec un contrôle de flux est observée par une diminution dans un facteur de 2,6 du taux d'échec instantané de 65% dans le troisième mode 316 qui passe à 25% dans le deuxième mode 314.

Suivant la Figure 9B, des première, deuxième, troisième courbes 332, 334, 336 représentent l'évolution respective de la probabilité de retard cumulée d'une tentative d'entrée réussie dans le réseau en fonction de la valeur du retard exprimée en nombre de durée de trame pour les premier, deuxième et troisième modes 312, 314, 316. La Figure 9B met en évidence que lorsque la capacité du canal est adaptée dynamiquement selon le premier mode 312, une transmission d'une salve est suffisante pour obtenir une probabilité de succès égale à 88% et une seule retransmission est requise pour obtenir une probabilité de succès de 98%. En outre, l'influence bénéfique de l'utilisation d'un procédé de contrôle de flux dans le deuxième mode 314 par rapport à l'absence d'utilisation d'un contrôle de flux dans le troisième mode 316 est observée par une diminution dans un facteur de 1,4 d'un retard nécessaire de 41 durées de trame pour atteindre une probabilité de succès d'accès d'un entrant de 90% dans le troisième mode à un retard nécessaire de 29 durées de trame pour atteindre une même probabilité de 90% dans le deuxième mode 314.

Suivant la Figure 9C, une répartition du nombre de transmissions requis pour une entrée réussie dans le réseau en fonction du nombre de retransmissions, représenté sur l'axe des abscisses, est fournie pour chacun des modes 312, 314, 316.

La répartition 342 confirme l'influence bénéfique au premier chef d'une adaptation dynamique de la capacité et l'effet bénéfique de la mise en oeuvre d'un contrôle de flux dans le cas où un accroissement instantané de la capacité du canal n'est pas possible notamment à cause d'un manque de ressources disponibles à un instant donné.

Suivant la Figure 10, une première configuration classique 352 de transfert de données entre un terminal TE et une passerelle GW utilise un premier canal RACH à contention et un deuxième canal en mode DAMA (en anglais « Demand Assigned Multiple Access ») ou PAMA (en anglais « Pulse Assigned Multiple Access »), couplé au premier canal RACH et comprend en général quatre étapes ou phases.

Dans une première phase 354, le terminal TE accède au réseau via le canal RACH à contention, défini par une trame logique de segmentation temporelle et partagé entre utilisateurs, et attend comme réponse d'un canal de notification CCCH (en anglais Common Control Channel) au moins une allocation de ressource minimale de contrôle.

Puis, dans une deuxième phase 356, le terminal TE demande des ressources dédiées (mode DAMA) via le canal de contrôle DCCH (en anglais Dedicated Control Channel) qui lui a été alloué dans la première phase 354 pour écouler les données qui peuvent être des données utiles d'un service utilisateur mais également de signalisation et/ou de contrôle du système de transmission comme par exemple des données de synchronisation, de contrôle de puissance, etc.

Ensuite, dans une troisième phase 358, le terminal TE transfert le volume utile de données vers la passerelle GW sur les ressources allouées, en l'espèce un canal de trafic DTCH (en anglais « Dedicated Traffic Channel »), allouées dans la deuxième phase 356 sur le canal de notification CCCH.

Puis dans une quatrième phase 360, les ressources DCCH et DTCH, allouées dans les première et deuxième phases 354, 356, sont libérées en fin de transfert.

Le canal de contrôle DCCH est généralement dédié sur un circuit multiplexé entre les terminaux TE

Les ressources allouées sont : soit en mode DAMA (majoritairement le cas), soit en mode PAMA ou « circuit » éventuellement multiplexé.

Cette première configuration de transfert de données 352 peut être utilisée et est utilisée pour transférer de faibles volume de données.

Les applications typiques qui nécessitent un faible volume de données sont par exemple du type collectes (en anglais « gathering »), télémesures / capteurs, alarmes, les équivalent « SMS ». Une autre application peut être également la signalisation de couche MAC / DAMA (requête de capacité, maintenance-synchronisation, etc.).

Cette première configuration de transfert de données 352 est inefficace pour transférer de petits volumes de données sporadiques. En effet, le rapport du volume des données utiles sur le volume total des ressources allouées et le temps de transfert utile sur le temps de session totale sont faibles pour cette configuration.

Une deuxième configuration 372, décrite sur la Figure 10, est proposée pour pallier cette inefficacité. La deuxième configuration de transfert de données 372 exploite avantageusement la flexibilité de la mise à jour de la capacité du canal RACH apporté par le procédé d'adaptation de la capacité du canal RACH afin de transférer directement les données sur ce canal RACH, maximiser ainsi la capacité instantanée requise sans écroulement du canal, et minimiser les ressources utiles et les temps de session de transfert.

Les données de l'utilisateur sont alors segmentées sur quelques salves aller par le terminal TE puis réassemblées par la passerelle GW. Un protocole léger en mode non connecté entre le terminal TE et la passerelle GW est mis en oeuvre afin de pouvoir retransmettre d'éventuels segments de données (type « liste segments reçus/non reçus » par exemple) lorsqu'une collision de salves a lieu. Le nombre de salves aller requis dépend directement de la taille de la charge utile (en anglais « payload ») et des performances de la forme d'onde utilisée en termes par exemple de temps de garde, de modulation/codage.

En considérant par exemple deux salves aller pour écouler les données d'un terminal utilisateur TE, les diagrammes des échanges dimensionnés pour le transfert de ces deux salves utiles permettent de déterminer un premier facteur de gain en termes de ressources utiles égale à deux environ (2,25 salves pour la deuxième configuration au lieu de 5,12 salves pour la première configuration), et un deuxième facteur de gain en termes de temps de transfert utile égale à quatre environ lorsqu'un satellite géostationnaire est utilisé.

Les Figures 11A et 11B montrent l'effet bénéfique du procédé d'adaptation dynamique du canal RACH, lorsque le canal RACH est utilisé pour le transfert d'un trafic sporadique non prédictible de donnée de faible volume et que l'on passe d'un premier profil de trafic 382 ayant des pics de débit en entrée nécessitant une salve montante par TE à un deuxième profil de trafic 384 ayant des pics de débit en entrée nécessitant deux salves montantes par TE.

Suivant la Figure 11A, une première courbe 392 représente l'évolution de la probabilité cumulée de temps de succès d'accès d'un entrant en fonction du temps ou du retard, exprimé en nombre de durées de trame, en réponse au premier profil de trafic 382.

Une deuxième courbe 394 représente l'évolution de la probabilité cumulée de temps de succès d'accès d'un entrant en fonction du temps en réponse au deuxième profil de trafic 384 dont le débit entrant des pics est le double de celui des pics du premier profil.

Dans le cas du premier profil 382, 88% des tentatives d'accès ont abouti en un seul essai sans collision, et 97% des tentatives d'accès ont abouti avec au plus une retransmission.

Dans le cas du deuxième profil 384, 83% des tentatives d'accès ont abouti en un seul essai sans collision, et 96% des tentatives d'accès ont abouti avec au plus une retransmission.

Suivant la Figure 11B, une première courbe 396 représente l'évolution temporelle d'un trafic d'entrée ayant le premier profil 382, le temps courant étant exprimé par un numéro courant de trame. Une deuxième courbe 398 représente l'évolution en temps réel de la capacité externe du canal RACH en termes de nombre de salves de sortie utilisées par trame en réponse au trafic d'entrée 396 ayant le premier profil. Une troisième courbe 400 représente l'évolution temporelle d'un trafic d'entrée ayant le deuxième profil 384. Une quatrième courbe 401 représente l'évolution en temps réel de la capacité externe du canal RACH en termes de nombre de salves de sortie utilisées par trame en réponse au trafic d'entrée 400 ayant le deuxième profil 384.

Les Figures 11A et 11B mettent en évidence que le temps de transfert, et donc le nombre de retransmissions sur collision, n'est quasiment pas impacté par le nombre de salves montantes requis en moyenne pour un débit en entrée. Les Figures 11A et 11B montrent également la stabilité des prises de décisions de la mise à jour de la capacité qui suit en temps réel l'enveloppe du pic de débit instantané en entrée.

Suivant la Figure 12, un procédé de transmission 402 de paquets de donnée ou de fragments de paquets sous la forme de salves utilise un canal de transmission RACH à contention tramé et comprend un ensemble d'étapes.

Le canal RACH est partagé par une pluralité de terminaux formant un premier réseau et définit une voie aller depuis les terminaux vers une passerelle de connexion à un deuxième réseau.

Le procédé de transmission 402 comprend le procédé d'adaptation dynamique 102 de la capacité du canal de transmission, tel que décrit ci-dessus et dans la Figure 2 et un procédé de contrôle de flux 404, couplé au procédé d'adaptation dynamique de la capacité 102.

Le procédé de contrôle de flux 404 comprend une sixième étape 406 et un septième étape 408.

Dans la sixième étape 406, la passerelle GW fournit une liste actuelle de classes de terminaux dans laquelle sont distingués les classes des terminaux autorisés à émettre et les classes des terminaux auxquels l'émission est interdite.

Puis dans la septième étape 408, lorsque le franchissement du seuil supérieur $S_H$ induit une décision d'augmenter la capacité du canal et qu'une taille maximale prédéterminée du canal est atteinte, la passerelle déclenche une augmentation du niveau de contrôle de flux en interdisant par un tirage aléatoire l'émission à une classe de terminaux, autorisée à émettre de la liste actuelle.

Dans la même septième étape 408, lorsque le franchissement du seuil inférieur $S_L$ induit une décision de diminuer la capacité du canal, déclencher une baisse du niveau de contrôle de flux en autorisant par un tirage aléatoire l'émission à une classe de terminaux, interdite d'émettre de la liste actuelle.

La liste actuelle est ainsi mise à jour et le tirage aléatoire permet de garantir une équité entre les terminaux utilisateurs.

En outre, le procédé de transmission 402 comprend, en complément du procédé de contrôle de flux 404 et couplé au procédé d'adaptation dynamique 102 de la capacité du canal RACH, un procédé de contrôle de congestion 410 dans lequel l'étalement des délais des terminaux autorisés à émettre est une fonction croissante du niveau de contrôle de flux.

Le contrôle de congestion en se basant sur le nombre de classes interdites, et donc implicitement de la charge externe du canal, étale les délais de transmission des terminaux autorisés à émettre. Le couplage du contrôle de congestion avec le contrôle de flux permet de limiter le taux d'échec de transmission et de sortir plus rapidement de la phase de congestion.

Suivant la Figure 13, les étapes 104, 106, 110, 112 du procédé d'adaptation dynamique de la capacité du canal RACH et le procédé de contrôle de flux sont mis en oeuvre par la passerelle GW en exécutant un ensemble 502 de sous-étapes.

Dans une première sous-étape 504 une salve transmise via le canal RACH est reçue et démodulée par le récepteur de la passerelle GW dans lequel est intégré un démodulateur.

Puis dans une deuxième sous-étape 506, il est vérifié si la salve reçue est vide ou non. Une salve est considérée comme vide si au moins la puissance estimée du signal reçu est inférieur ou égal à un premier seuil minimal Th1 sans pouvoir détecter une forme d'onde d'un signal utile de salve.

Lorsque la salve reçue est considéré comme vide, dans une troisième sous-étape 508 un compteur du nombre de salves vides Ne, initialisé à zéro en début de la période d'observation, est incrémenté d'une unité.

Lorsqu'une salve est considérée comme non vide, il est vérifié dans une quatrième sous-étape 510 si la salve reçue a été correctement reçue, c'est-à-dire si la salve n'a pas subi de collision. La réception et la démodulation d'une sale non vide sont considérées comme réussies si au moins la puissance estimé du signal reçu est supérieur ou égal à un deuxième seuil Th2 avec un mot unique correct UW (en anglais Unique Word, le mot unique étant un motif de données fixé, placé en début de salve, voir même un motif de données étalé dans la salve, et servant à la synchronisation), le deuxième seuil Th2 étant nettement supérieur au premier seuil Th1.

Lorsque la réception de la salve est considérée comme réussie, le traitement de la salve est poursuivi dans une cinquième sous-étape 512 et dans une sixième sous-étape 514, un compteur du nombre de salves reçues correctement Ns, initialisé à zéro en début de la période d'observation, est incrémenté d'une unité.

Lorsque la salve est considérée avoir subi une collision, un autre traitement est mis en oeuvre dans une septième sous-étape 516.

Dans une huitième étape 518, immédiatement consécutive à la troisième sous-étape 508 ou la sixième sous-étape 514, il est vérifié si la fin de la période d'observation Tobs est atteinte. La période d'observation est un multiple de la durée d'une trame et est égale au moins la durée d'une trame.

Lorsque la fin de la période d'observation est atteinte, la valeur Ne du premier compteur est le nombre de salves vides observées pendant cette période d'observation et la valeur Ns du deuxième compteur est le nombre de salves de réception réussie, observées pendant cette période d'observation. Le nombre entier N désignera par la suite le nombre de salves disponibles pendant cette période d'observation.

Lorsque la fin de la période d'observation est atteinte, une neuvième sous-étape 520 de traitement de mise à jour des informations de composition et/ou du contrôle de flux du canal RACH est exécutée.

Puis, une dixième sous-étape 522 est exécutée au cours de laquelle les premier et deuxième compteurs Ne, Ns sont réinitialisés en les mettant à zéro et une connexion entre les première et deuxième sous étapes 504, 506 après une temporisation pour lancer une nouvelle fenêtre d'observation.

Lorsque la fin de la période d'observation n'est pas encore atteinte, dans une onzième sous-étape 524, la fenêtre d'observation reste ouverte et aucune action particulière n'est déclenchée sur cette absence d'évènement.

Les nombres de salves comptabilisées Ne, Ns, N vont permettre l'estimation des probabilités respectives Pe, Ps lors de l'exécution de la neuvième sous-étape 520. L'ensemble 520 des sous-étapes de mise en oeuvre du procédé d'adaptation dynamique du canal RACH au niveau de la passerelle diffère d'un procédé de traitement classique des salves au niveau de la passerelle GW en ce que l'ensemble 520 comprend les sous-étapes 506, 508, 514, 518, 520, 522, ces dernières étant mises en évidence par un motif grisé et des bordures en trait continu.

Suivant la Figure 14, la neuvième étape 520 comprend un ensemble 532 de sous-étapes.

Dans une douzième sous-étape 534, le respect d'une période minimale entre deux mises à jour successives de la composition du canal RACH est vérifié. Cette période minimale est requise afin de stabiliser les estimations des probabilités Pe, Ps et Pc ou de l'estimation de la charge externe en entrée G qui doivent être représentatives de la mise à jour de la composition du canal associée à la notification la plus récente ; sinon les estimations courantes seront erronées avec des mesures applicables à la composition du canal suivant la notification précédente. La période minimale est au moins égale au maximum du temps pris parmi la longueur temporelle du filtre (période d'observation) et le temps de trajet de la notification de changement de la composition du canal et de sa prise en compte par les terminaux utilisateurs.

Lorsque la période minimale n'est pas encore écoulée, la treizième sous-étape 536 interdit toute action de mise à jour de la composition du canal RACH.

Lorsque le respect de la période minimale est vérifié, un traitement de mise à jour de la composition du canal RACH est autorisé et une quatorzième sous-étape 538 est exécutée au cours de laquelle les probabilités Pe, Ps, Pc ou la charge externe d'entrée sont estimées.

Les probabilités Pe et Ps sont estimées et calculées comme étant égales respectivement aux rapports Ne/N et Ns/N.

La probabilité Pc est calculée en utilisant l'expression $Pc \sim 1 - (Pe+Ps)$. En toute rigueur la relation : $Pc + Pe + Ps + PBR = 1$ est vérifiée dans laquelle la probabilité PBR (en anglais « Probability of Burst Error ») est la probabilité d'une erreur de salves, causée principalement par des conditions du canal dépendantes du bruit. Cependant la probabilité PBR est généralement très faible en regard des valeurs des seuils de Pe ou Pc ou d'estimation de G qui sont utilisées pour la mise à jour de la capacité. En conséquence l'approximation $Pc \sim 1 - (Pe + Ps)$ est permise.

Un simple filtre est utilisée pour lisser les variations brusques des variations de Pe, Ps (moyenne mobile, exponentiel du premier ordre), la longueur du filtre étant en lien avec le temps de réaction. Des filtres d'extrapolation plus sophistiquée peuvent être également utilisés.

Puis dans la quinzième sous-étape 540, il est vérifié si le critère d'une décision de diminuer la capacité du canal RACH est rempli.

Lorsque la ou les conditions du critère de diminuer la capacité du canal RACH sont remplies, dans une seizième sous-étape 542, la passerelle diminue d'une unité un niveau de contrôle de flux du canal RACH. Le mécanisme de contrôle de flux fournit et utilise une liste indiquant les classes de terminaux autorisées à émettre ou non. Le niveau de contrôle de flux est le nombre total de classes bloquées, c'est-à-dire non autorisées à émettre. Une baisse du niveau du contrôle de flux consiste à autoriser une classe précédemment interdite à émettre à nouveau, cette classe autorisée étant aléatoirement tirée dans la liste parmi l'ensemble des classes interdites. Ce mode de gestion permet de garantir une équité entre les utilisateurs.

Puis dans une dix septième sous-étape 544, il est vérifié si l'élargissement de l'ensemble des classes autorisées effectuée dans l'étape précédente 542 ne remet pas en cause la décision de diminuer la capacité du canal RACH.

Lorsque la décision de diminuer la capacité du canal RACH est remise en cause, dans une dix huitième étape 546 la passerelle GW notifie aux terminaux TE des informations de mise à jour contenant une composition du canal identique à la précédente et une liste de classes autorisées/bloquées diminuée en termes de classes bloquées.

Lorsque la diminution de la capacité du canal RACH est considérée possible et la décision de diminuer la capacité confirmée, dans une dix neuvième étape 548 la passerelle GW notifie aux terminaux TE des informations de mise à jour contenant une nouvelle composition du canal RACH dont le nombre N des prochaines salves applicables est diminué, et une liste de classes autorisées/bloquées diminuée en termes de classes bloquées.

Lorsque la ou les conditions du critère de diminuer la capacité du canal RACH ne sont pas remplies, dans une vingtième sous-étape 550 il est vérifié si le critère d'une décision d'augmenter la capacité du canal RACH est rempli.

Lorsque la ou les conditions du critère d'augmenter la capacité du canal RACH sont remplies, dans une vingt et unième sous-étape 552, il est vérifié si la décision d'augmenter la capacité du canal RACH est possible à implémenter c'est à dire qu'une capacité maximale prédéterminée du canal n'a pas été dépassée.

Si l'augmentation de la capacité du canal RACH est possible à réaliser une vingt deuxième sous-étape 554 est exécutée dans laquelle la passerelle GW notifie aux terminaux TE des informations de mise à jour contenant une nouvelle composition du canal RACH dont le nombre N des prochaines salves applicables est augmenté, la liste de classes autorisées/bloquées restant inchangée.

Si l'augmentation de la capacité du canal RACH est jugée impossible en raison du fait que la capacité maximale du canal RACH a été atteinte, une vingt troisième sous-étape 556 est exécutée dans laquelle la passerelle diminue d'une unité le niveau de contrôle de flux du canal RACH. Une augmentation du niveau du contrôle de flux consiste à interdire une classe précédemment non interdite d'émettre, cette classe interdite étant aléatoirement tirée dans la liste des classes parmi l'ensemble des classes autorisées. Ce mode de gestion permet de garantir une équité entre les utilisateurs. Dans la même vingt troisième sous-étape 556, la passerelle GW notifie aux terminaux TE des informations de mise à jour contenant la composition précédente du canal RACH inchangée et la liste de classes autorisées/bloquées augmentée en termes de classes bloquées. Le niveau de contrôle de flux et la mise à jour de liste sont encodés sur quelques bits de sorte à permettre une répétition fréquente des notifications en utilisant un canal de signalisation de faible capacité.

Suivant la figure 15, les étapes 104, 106, 110, 112 du procédé d'adaptation dynamique de la capacité du canal RACH, le procédé de contrôle de flux 404, et procédé de contrôle de congestion 410 sont mis en oeuvre au niveau de chaque terminal TE par un ensemble 602 de sous-étapes.

Dans une première sous-étape 604, le terminal TE considéré initialise une première fois ou réinitialise un compteur d'essais ou tentatives Nb_tr, initialise une première fois ou réinitialise un compteur de classes bloquées Nb_blk de terminaux. Dans la même sous-étape 604, le terminal TE considéré tire aléatoirement un numéro de classe locale « My Level » compris dans la liste totale des classes possibles.

Puis dans une deuxième sous-étape 606, le terminal TE acquiert sur le canal de signalisation de voie retour la composition mise à jour du canal RACH et acquiert la liste mise à jour des classes autorisées et le niveau de contrôle de flux.

Puis dans une troisième sous-étape 608, le terminal TE vérifie si le numéro de classe locale « My Level » tiré aléatoirement est autorisé, c'est-à-dire si ce numéro correspond à une classe autorisée dans la dernière liste de classes autorisées qui a été notifiée par la passerelle et acquise par le terminal TE.

Lorsque le numéro de classe locale « My Level » du terminal n'est pas autorisée, une quatrième sous-étape 610 est exécutée au cours de laquelle le nombre de classes bloquées Nb_blk est incrémenté d'une unité.

Puis dans une cinquième sous-étape 612, le procédé de transmission est suspendu pendant un délai ou une temporisation de recul T2 dont la valeur est déterminée aléatoirement suivant une loi de tirage prédéterminée.

Typiquement, la loi de tirage est une loi de type recul binaire exponentielle BEB (en anglais « Binary Exponential Backoff »), paramétrable en fonction du niveau actuel de contrôle de flux, et connu pour ses bonnes performances d'étalement de collisions éventuelles de salves utilisant un canal de contention.

Ensuite au cours d'une sixième sous-étape 614, il est vérifié si une condition multicritère de poursuite du procédé de transmission est remplie ou pas. Cette condition est remplie si des premier, deuxième, troisième critères sont satisfaits cumulativement.

Le premier critère requiert que le nombre d'essais Nb_tr est inférieur ou égal à K, K désignant le nombre maximal de retransmission de salves.

Le deuxième critère requiert que le nombre de classes bloquées Nb_blk est inférieur ou égal au nombre actuel de classe non autorisées.

Le troisième critère requiert que la durée totale écoulée du procédé 602, incluant la somme du temps d'acquisition des informations concernant la composition et le contrôle de flux du canal RACH, la temporisation de recul T2 et une temporisation T1 d'attente d'un accusé réception d'une salve envoyée à la passerelle est inférieure à une durée maximale prédéterminée.

Si la condition multicritère de la sixième sous-étape 614 n'est pas remplie, dans une septième sous-étape 616 l'accès au réseau est refusé et ce refus est notifié à l'utilisateur via le terminal.

Si la condition multicritère de la sixième sous-étape 614 est remplie, la deuxième sous-étape 606 et la troisième sous-étape 608 consécutive sont exécutées.

Lorsque le numéro de classe locale « My Level » du terminal est autorisée, une huitième sous-étape 618 est exécutée au cours de laquelle le nombre de classes bloquées Nb_blk est réinitialisé, et une salve est émise sur une ressource de transmission autorisée d'après la dernière composition du canal RACH reçue. Dans la même huitième sous-étape 618, le compteur d'essais Nb_tr est incrémenté d'une unité.

Puis dans une neuvième sous-étape 620, il est vérifié si un acquittement de la salve envoyée dans la huitième sous-étape 618 a été reçue avant la temporisation d'attente T1.

Si un acquittement attestant de la réception réussie de la salve a été reçu par le terminal TE, dans une dixième sous-étape 622 le procédé 602 est terminé ou poursuivi par la transmission d'un nouveau paquet ou fragment de paquet.

Si un acquittement de réception de la salve n'est pas reçu dans le délai, une onzième sous-étape est exécutée au cours de laquelle le compteur d'essais Nb_tr est incrémenté d'une unité, suivi de l'exécution de la cinquième sous-étape 612.

Par exemple, une loi de type recul binaire exponentielle BEB, paramétrable en fonction du niveau actuel de contrôle de flux est définie ci-dessous pour un maximum de dix classes de contrôle de flux et un niveau actuel de contrôle de flux ou de classes bloquées compris entre 0 et 10.

T2 est un tirage aléatoire d'un nombre entier de trame compris entre 1 et $T2_{MAX}$.

$T2_{MAX}$ est défini par la relation $T2_{MAX} = [T2_{MIN} + MIN (2^R, M)] * S$ dans laquelle :

- T2MIN désigne un intervalle minimum de trames, typiquement égal à 4,
- M désigne un nombre maximum de trames, typiquement égal à 8,
- R désigne un nombre de tentatives de retransmission supérieur ou égal à 1,
- L désigne le nombre actuel de classes bloquées reflétant le niveau actuel de congestion, et
- S désigne un facteur de dilatation tenant compte du niveau de congestion tel que $S = 1 + L/4$.

Les valeurs de M et S sont évaluées par simulation de façon à minimiser les temps de succès et à minimiser la probabilité d'indisponibilité système.

Dans cet exemple, S=1, 2 ou 3 mettent en évidence un taux de congestion « nul / faible », « moyen » ou « élevé » permettant un étalement du tirage de T2 ayant une borne $T2_{MAX}$ =12, 24, 36.

Il est à remarquer que les sous-étapes 606, 608, 610, 612, 614 définissent une première boucle 632, conditionnée par les sous étapes 608, 614 et correspondant à la mise en oeuvre par le terminal TE du mécanisme de contrôle de flux.

Les sous-étapes 606, 608, 618, 620, 624, 612, 614, 606 définissent une deuxième boucle 634, conditionnée par les sous étapes 608, 620, 614 et correspondant à la mise en oeuvre par le terminal TE du mécanisme du contrôle de congestion.

Le procédé d'adaptation dynamique de la capacité du canal RACH selon l'invention, avec un couplage possible d'un mécanisme de contrôle de flux et/ou de congestion permet d'éviter la réservation et l'immobilisation de ressources de transmission (essentiellement une ou des bandes de fréquences) sur des durées longues, supérieures ou égales à la minute, comme c'est le cas pour des mises à jour exécutées par planification ou par d'autres moyens équivalents.

Le procédé d'adaptation dynamique de la capacité du canal RACH selon l'invention permet d'obtenir des temps typiques de mise à jour en temps réel de la capacité du canal RACH, inférieurs ou égaux à la seconde, et largement inférieurs aux durées longues.

Le procédé d'adaptation dynamique de la capacité de l'invention permet de réserver uniquement la bande minimale requise pour démarrer ou « booter » les premières entrées dans le réseau.

L'adaptation en quasi-temps réel de la capacité du canal par ajout / retrait de ressources de transmissions (tranches de temps (en anglais « time-slots ») ou porteuses) permet d'optimisation le plan de fréquence utile.

En outre, le procédé d'adaptation dynamique de la capacité nécessite très peu de temps de traitements, indépendamment de l'entité physique qui l'exécute (un satellite avec un traitement bord ou une station terrestre avec un traitement sol), la complexité des traitements étant réduite.

La gestion des ressources pour la prise en compte de la capacité étant similaire à celles existantes dans les réseaux d'accès classiques, les traitements du coeur de l'algorithme du procédé de l'invention sont simples, négligeables en temps de calcul et facilement réalisables par logiciel.

Ces traitements mis en oeuvre au niveau de la passerelle sont principalement les suivants :

.- la comparaison à un seuil de puissance minimum pour déclarer une salve vide en sortie du démodulateur puis accumulation dans des compteurs (Ne, Ns) sur une période (au moins 1 trame) ;

.- le calcul de la sortie d'un filtre (par moyenne glissante par exemple)

.- la comparaison de la sortie du filtre par rapport à un seuil pour augmenter ou diminuer la capacité requise, et/ou mettre en place le contrôle de flux.

L'ordre de complexité de cet algorithme est O(N), N étant le nombre de salves configurées par trame à un instant donné en mode « contention » dans le démodulateur et avec un temps de traitement constant par salve aller reçu.

Les traitements ajoutés au niveau des terminaux utilisateurs sont également simples, requièrent des temps de calcul négligeables et sont facilement réalisables en logiciel.

L'invention est applicable à tout système de communications par satellite(s), à tout système de communications cellulaires ou similaires qui nécessite un canal à contention tramé sollicité spontanément sur un lien ou montant.

Il est à remarquer que même si les performances décrites ci-dessus de l'invention sont celles de protocoles d'accès à contention tramé, c'est à dire synchrone, le procédé de l'invention décrite ci-dessus est également applicable lorsque les protocoles d'accès à contention asynchrone (non tramé) sont utilisés, comme par exemple le protocole ESSA (en anglais Enhanced Spread Spectrum ALOHA) et le protocole SMIM (en anglais « S-band Mobile Interactive MultiMedia »).

**Revendications**

1. Procédé d'adaptation dynamique de la capacité d'un canal de transmission à contention (20) utilisant un protocole d'accès prédéterminé,
   le canal (20) étant partagé par une pluralité de terminaux (4, 6, 8) TE formant un premier réseau et définissant une voie montante (24) depuis les terminaux (4, 6, 8) vers une passerelle (12) GW de connexion à un deuxième réseau,
   le procédé comprend les étapes suivantes :

   .- dans une première étape (104), fixer la valeur d'une charge externe souhaitée en tant que point de fonctionnement nominal du canal (20), la charge externe réelle du canal (20) étant égale au taux actuel de nouveaux terminaux entrants émettant une salve respective de données sur le canal ;
   .- dans une deuxième étape (106), déterminer à l'aide d'un modèle mathématique ou d'une simulation, un premier seuil supérieur $S_H$ et un deuxième seuil inférieur $S_L$ d'une grandeur Gr sensible de manière monotone à une charge externe du canal à contention, les charges externes du canal à contention supérieure et inférieure correspondant respectivement au premier seuil supérieur $S_H$ ou deuxième seuil inférieur $S_L$, la grandeur sensible Gr dépendant d'une première probabilité de réception d'une salve vide Pe, ou d'une paire de la première probabilité Pe et d'une deuxième probabilité de réception réussie d'une salve Ps, ou d'une troisième probabilité d'une salve ayant subi une collision Pc, et du type et de paramètres définissant le protocole d'accès à contention;
   .- dans une troisième étape (108), estimer en continu sur une fenêtre d'observation de largeur prédéfinie et à partir de mesures en réception dans ladite fenêtre d'observation des salves attendues une première probabilité mesurée de réception d'une salve attendue vide Pe, ou une paire de probabilités mesurées formée par la première probabilité mesurée Pe et une deuxième probabilité mesurée de réception réussie d'une salve Ps, ou une troisième probabilité mesurée d'une salve ayant subi une collision Pc ;
   .- dans une quatrième étape (110), déterminer la grandeur sensible Gr mesurée actuelle Gr en fonction de la première probabilité mesurée Pe, ou de la paire des probabilités mesurées Pe et Ps, ou de la troisième probabilité mesurée Pc ;
   .- dans une cinquième étape (112) de prise de décision,

   lorsqu'un franchissement du premier seuil supérieur $S_H$ par la grandeur sensible actuelle a lieu une fois ou plusieurs fois consécutives en s'éloignant de la valeur de la grandeur correspondant à la charge externe nominale, augmenter la capacité actuelle du canal de transmission (20) en libérant des ressources de communication supplémentaires et en informant par une voie retour les terminaux de la nouvelle composition du canal de transmission à capacité augmentée ; et/ou
   lorsqu'un franchissement du deuxième seuil inférieur $S_L$ a lieu par la grandeur sensible actuelle une fois ou plusieurs fois consécutives en s'éloignant de la valeur de la grandeur correspondant à la charge externe nominale, diminuer la capacité actuelle du canal de transmission en retirant des ressources de communication en termes de fréquences parmi les ressources de transmission mis actuellement à disposition et en informant par la voie retour les terminaux de la nouvelle composition du canal de transmission à capacité diminuée.

2. Procédé d'adaptation dynamique de la capacité d'un canal de transmission à contention selon la revendication 1, dans lequel
   La largeur de la fenêtre d'observation définissant la période temporelle d'observation est choisie suffisamment petite pour filtrer des amplitudes d'un bruit de fluctuations rapides de la probabilité (Pe) ou des deux probabilités (Pe, Ps) estimées en continu et permettre une réactivité adaptée.

3. Procédé d'adaptation dynamique de la capacité d'un canal de transmission à contention selon l'une quelconque des revendications 1 à 2, dans lequel
   La grandeur Gr sensible de manière monotone à la charge externe du canal à contention est comprise dans l'ensemble formé par

   .- la première probabilité mesurée de réception de salve attendue vide Pe;
   .- la troisième probabilité mesurée de collision de salve Pc ;
   .- une charge externe G calculée à partir de la première probabilité mesurée de réception de salve attendue vide Pe et d'un nombre maximum de retransmissions K.

4. Procédé d'adaptation dynamique de la capacité d'un canal de transmission à contention selon la revendication 3, dans lequel

La troisième probabilité mesurée de collision de salve Pc est

Soit estimée directement à partir du nombre mesuré de salves ayant subi une collision observées dans la fenêtre d'observation ;

Ou calculée à partir de première probabilité mesurée de réception de salve attendue vide Pe et de la deuxième probabilité mesurée de réception correcte de salve Ps suivant l'expression :

$$P_c = 1 - (P_e + P_S).$$

**5.** Procédé d'adaptation dynamique de la capacité d'un canal de transmission à contention selon la revendication 3, dans lequel la charge externe G est calculée pour un canal SA à partir de l'expression

$$G = -P_e * Ln(P_e)/[1 - (1 - P_e)^{K+1}]$$

Où

Pe désigne la première probabilité mesurée de réception de salve attendue vide, et
K désigne le nombre maximum de retransmissions.

**6.** Procédé d'adaptation dynamique de la capacité d'un canal de transmission à contention selon l'une quelconque des revendications 1 à 5, dans lequel
Le premier seuil supérieur $S_H$ et le deuxième seuil inférieur $S_L$ de la grandeur sensible sont déterminés à partir d'un modèle représentatif du protocole utilisé par le canal à contention de sorte à

.- minimiser les erreurs de décisions de changement de capacité, et
.- stabiliser les décisions de changement de capacité, et
.- assurer une bonne réactivité temporelle de changement, et
.- optimiser les performances du canal pour éviter un écroulement du canal en raison d'un trop grand nombre de collisions.

**7.** Procédé d'adaptation dynamique de la capacité d'un canal de transmission à contention selon l'une quelconque des revendications 1 à 6, dans lequel
une décision $D_{up}$ est prise d'augmenter la capacité du canal lorsque le franchissement du premier seuil supérieur $S_H$ par en dessus a eu lieu un premier nombre $N_{up}$ de fois consécutives, et/ou
une décision $D_{down}$ est prise de diminuer la capacité du canal lorsque le franchissement du deuxième seuil inférieur $S_L$ a eu lieu un deuxième nombre $N_{down}$ de fois consécutives par en dessus,

Le premier nombre $N_{up}$ étant le plus petit nombre entier supérieur ou égal à deux tel que :

$$\left(1 - D_{up}\right)^{Nup} \leq P_{up\_res}$$

où

$D_{up}$ désigne la probabilité d'une bonne décision lorsque le seuil supérieur a été franchi par en dessous une fois et $P_{up\_res}$ une probabilité résiduelle de mauvaise décision prédéterminé, et
Le deuxième nombre $N_{down}$ étant le plus petit nombre entier supérieur ou égal à deux tel que :

$$\left(1 - D_{down}\right)^{Ndown} \leq P_{down\_res}$$

où

$D_{down}$ désigne la probabilité d'une bonne décision lorsque le seuil inférieur a été franchi par en dessus une fois et $P_{down\_res}$ une probabilité résiduelle de mauvaise décision prédéterminé.

**8.** Procédé d'adaptation dynamique de la capacité d'un canal de transmission à contention selon la revendication 7, dans lequel
Le deuxième nombre de franchissements consécutifs $N_{down}$ est nettement supérieur ou égal au deuxième nombre de franchissements consécutifs $N_{up}$ dans un rapport $N_{down}/N_{up}$ supérieur ou égal à 5, de préférence supérieur ou égal à 10.

**9.** Procédé d'adaptation dynamique de la capacité d'un canal de transmission à contention selon l'une quelconque des revendications 1 à 8, dans lequel l'augmentation et/ou la décroissance décidé de capacité du canal est effectuée en suivant de manière un même profil de croissance et décroissance de la capacité par palier ou degré.

**10.** Procédé d'adaptation dynamique de la capacité d'un canal de transmission à contention selon l'une quelconque des revendications 1 à 9, dans lequel
Le protocole d'accès à contention utilisé par le canal est compris dans l'ensemble des protocoles contention tramé formé par le protocole ALOHA à segmentation temporelle ou tramée (en anglais Slotted ALOHA) et ses dérivés combinant l'effet de capture CE (en anglais Capture Effect) et/ou l'effet d'utilisation d'une diversité (temporelle ou fréquentielle) et d'une résolution des conflits d'accès CRD (en anglais Contention Resolution Diversity).

**11.** Procédé d'adaptation dynamique de la capacité d'un canal de transmission à contention selon l'une quelconque des revendications 1 à 10, comprenant en outre une étape d'initialisation (114) au cours de laquelle à un instant de démarrage la capacité actuelle du canal de transmission est mise à une valeur de capacité initiale prédéterminée.

12. Procédé d'adaptation dynamique de la capacité d'un canal de transmission à contention selon la revendication 11, dans lequel la capacité initiale est une capacité moyenne fixée arbitrairement au minimum égale à une salve toutes les N trames entières.

13. Procédé de transmission de paquets de données ou de fragments de paquets sous la forme de salves au travers d'un canal de transmission à contention (20), partagé par une pluralité de terminaux (4, 6, 8) formant un premier réseau et définissant une voie montante (24) depuis les terminaux (4, 6, 8) vers une passerelle de connexion (12) à un deuxième réseau, ledit procédé de transmission comprend un procédé d'adaptation dynamique (102) de la capacité du canal de transmission (20), défini selon l'une quelconque des revendications 1 à 12 et un procédé de contrôle de flux (404) couplé audit procédé d'adaptation dynamique (102) de la capacité,

le procédé de contrôle de flux (404) comprenant les étapes suivantes :

.- dans une sixième étape (406) fournir une liste actuelle de classes de terminaux distinguant les classes des terminaux autorisés à émettre et les classes des terminaux auxquels l'émission est interdite,

.- dans une septième étape (408), lorsque le franchissement du seuil supérieur $S_H$ induit une décision d'augmenter la capacité du canal et qu'une taille maximale prédéterminée du canal est atteinte, déclencher une augmentation du niveau de contrôle de flux en interdisant l'émission à une classe de terminaux, autorisée à émettre de la liste actuelle et choisie aléatoirement, et

.- dans la même septième étape (408), lorsque le franchissement du seuil inférieur $S_L$ induit une décision de diminuer la capacité du canal, déclencher une baisse du niveau de contrôle de flux en autorisant l'émission à une classe de terminaux, interdite d'émettre de la liste actuelle et choisie aléatoirement.

14. Procédé de transmission selon la revendication 13, comprenant un procédé de contrôle de congestion (410), couplé au procédé de contrôle de flux (404) et dans lequel l'étalement des délais des terminaux autorisés à émettre est une fonction croissante du niveau de contrôle de flux.

15. Système de transmission sous la forme de salves de paquets de données ou de fragments de paquets au travers d'un canal de transmission à contention (20), comprenant

Une pluralité de terminaux (4, 6, 8) formant un premier réseau, et

Une passerelle de connexion (12) à un deuxième réseau,

La passerelle de connexion (12) étant configurée pour recevoir sous forme de salves des paquets de donnée ou des fragments de paquets émis par les terminaux sur un canal de transmission de voie montante à contention, et

pour adapter dynamiquement la capacité dudit canal de transmission de voie montante à contention en fonction d'un trafic de terminaux entrants, et pour estimer en continu sur une fenêtre d'observation de largeur prédéfinie et à partir de mesures effectuées en réception dans ladite fenêtre d'observation des salves attendues une première probabilité de réception de salve attendue vide $P_e$, ou une paire de probabilités formée par la première probabilité Pe et une deuxième probabilité de réception correcte de salve $P_s$, ou une troisième probabilité de collision de salve $P_c$ ;

déterminer une grandeur actuelle Gr sensible de manière monotone à la charge externe du canal à contention à partir de la première probabilité estimée Pe ou la paire de probabilités formée par la première probabilité estimée Pe et la deuxième probabilité estimée de réception d'une salve correcte $P_s$, ou la troisième probabilité de réception d'une salve ayant subi une collision d'une salve $P_c$ ; puis

lorsqu'un franchissement d'un premier seuil supérieur $S_H$ par la grandeur actuelle a lieu une fois ou plusieurs fois consécutives en s'éloignant de la valeur de la grandeur correspondant à la charge externe nominale, augmenter la capacité actuelle du canal de transmission en libérant des ressources de communication supplémentaires en termes de fréquences supplémentaires et en informant par une voie retour les terminaux de la nouvelle composition du canal de transmission à capacité augmentée ; et/ou

lorsqu'un franchissement du deuxième seuil inférieur $S_L$ par la grandeur actuelle a lieu une fois ou plusieurs fois consécutives en s'éloignant de la valeur de la grandeur correspondant à la charge externe nominale, diminuer la capacité actuelle du canal de transmission en retirant des ressources de communication en termes de fréquences parmi les ressources de transmission mis actuellement à disposition et en informant par la voie retour les terminaux de la nouvelle composition du canal de transmission à capacité diminuée.

16. Système de transmission de paquets de données ou de fragments de paquets selon la revendication 15 dans lequel

.- la passerelle de connexion (12) est configurée pour mettre en oeuvre un mécanisme de contrôle de flux consistant à

fournir une liste actuelle de classes de terminaux distinguant les classes des terminaux autorisés à émettre et les classes des terminaux auxquels l'émission est interdite, et

. * lorsque le franchissement du seuil supérieur $S_H$ par la grandeur actuelle Gr induit une décision d'augmenter la capacité du canal et qu'une taille maximale prédéterminée du canal est atteinte, déclencher une augmentation du niveau de contrôle de flux en interdisant l'émission à une classe de terminaux, autorisée à émettre de la liste actuelle et choisie aléatoirement, et

. * lorsque le franchissement du seuil inférieur $S_L$ par la grandeur actuelle Gr induit une décision de diminuer la capacité du canal, déclencher une baisse du niveau de contrôle de flux en autorisant l'émission à une classe de terminaux, interdite d'émettre de la liste actuelle et choisie aléatoirement.

## Patentansprüche

**1.** Verfahren zur dynamischen Anpassung der Kapazität eines Konkurrenzübertragungskanals (20), der ein vorbestimmtes Zugriffsprotokoll verwendet, wobei der Kanal (20) auf eine Vielzahl von Endgeräten (4, 6, 8) TE aufgeteilt wird, die ein erstes Netzwerk bilden und einen Uplink-Kanal (24) von den Endgeräten (4, 6, 8) zu einem Gateway-Anschluss (12) GW an ein zweites Netzwerk definieren, wobei das Verfahren die folgenden Schritte umfasst:

- in einem ersten Schritt (104) den Wert einer gewünschten externen Last als Nennbetriebspunkt des Kanals (20) festlegen, wobei die tatsächliche externe Last des Kanals (20) gleich der aktuellen Rate von neu ankommenden Endgeräten ist, die einen entsprechenden Datenburst auf dem Kanal abgeben;
- Bestimmen, in einem zweiten Schritt (106), mit Hilfe eines mathematischen Modells oder einer Simulierung, eines ersten oberen Schwellenwerts $S_H$ und eines zweiten unteren Schwellenwerts $S_L$, einer auf eine gleichförmige Art für eine externe Last des Konkurrenzkanals sensiblen Größe Gr, wobei die externen Lasten des oberen und unteren Konkurrenzkanals jeweils dem ersten oberen Schwellenwert $S_H$ oder zweiten unteren Schwellenwert $S_L$ entsprechen, wobei die sensible Größe Gr von einer ersten Wahrscheinlichkeit des Empfangs eines leeren Bursts Pe, oder eines Paars der ersten Wahrscheinlichkeit Pe und einer zweiten Wahrscheinlichkeit des erfolgreichen Empfangs eines Bursts Ps, oder einer dritten Wahrscheinlichkeit eines Bursts, der einer Kollision Pc unterzogen wurde und des Typs und der Parameter, die das Konkurrenzzugriffsprotokoll definieren, abhängt;
- Fortlaufendes Abschätzen, in einem dritten Schritt (108), über ein Beobachtungsfenster mit vordefinierter Breite und anhand von Empfangsmessungen in dem Beobachtungsfenster der erwarteten Bursts, einer ersten gemessenen Wahrscheinlichkeit des Empfangs eines erwarteten leeren Bursts Pe, oder eines Paars von gemessenen Wahrscheinlichkeiten, das durch die erste gemessene Wahrscheinlichkeit Pe und eine zweite gemessene Wahrscheinlichkeit des erfolgreichen Empfangs eines Bursts Ps gebildet wird, oder einer dritten gemessenen Wahrscheinlichkeit eines Bursts, der einer Kollision Pc unterzogen wurde;
- Bestimmen, in einem vierten Schritt (110), der gemessenen aktuellen sensiblen Größe Gr, als Funktion der ersten gemessenen Wahrscheinlichkeit Pe, oder des Paars der gemessenen Wahrscheinlichkeiten Pe und Ps, oder der dritten gemessenen Wahrscheinlichkeit Pc bestimmen;
- in einem fünften Schritt (112) der Entscheidungsbildung,

wenn die aktuelle sensible Größe den ersten oberen Schwellenwert $S_H$ einmal oder mehrere Male hintereinander überschreitet und sich dabei von dem Wert der Größe entfernt, der der externen Nennlast entspricht, Erhöhen der aktuellen Kapazität des Übertragungskanals (20) durch Freisetzen zusätzlicher Kommunikationsressourcen und durch Informieren der Endgeräte durch einen Rückführungskanal über die neue Zusammensetzung des Übertragungskanals mit erhöhter Kapazität; und/oder, wenn die aktuelle sensible Größe einmal oder mehrere Male hintereinander den zweiten unteren Schwellenwert $S_L$ überschreitet und sich dabei von dem Wert der Größe entfernt, der der externen Nennlast entspricht, Verringern der aktuellen Kapazität des Übertragungskanals durch Entfernen von Kommunikationsressourcen in Bezug auf Frequenzen unter den derzeit zur Verfügung gestellten Kommunikationsressourcen und durch Informieren der Endgeräte durch den Rückführungskanal über die neue Zusammensetzung des Übertragungskanals mit verringerter Kapazität.

**2.** Verfahren der dynamischen Anpassung der Kapazität eines Konkurrenzübertragungskanals nach Anspruch 1, in dem die Breite des Beobachtungsfensters, das die zeitliche Beobachtungsperiode definiert, hinreichend klein ausgewählt wird, um die Amplituden eines Rauschens von schnellen Schwankungen der Wahrscheinlichkeit (Pe) oder der zwei fortlaufend geschätzten Wahrscheinlichkeiten (Pe, Ps) zu filtern und eine angepasste Reaktionsfähigkeit zu erlauben.

3. Verfahren zur dynamischen Anpassung der Kapazität eines Konkurrenzübertragungskanals nach einem der Ansprüche 1 bis 2, in dem die Größe Gr, die auf gleichförmige Art für die externe Last des Konkurrenzkanals sensibel ist, in der Gesamtheit umfasst wird, die gebildet wird durch

    - die erste gemessene Wahrscheinlichkeit eines leeren erwarteten Burst-Empfangs Pe;
    - die dritte gemessene Wahrscheinlichkeit einer Burst-Kollision Pc;
    - eine anhand der ersten gemessenen Wahrscheinlichkeit eines leeren erwarteten Burst-Empfangs Pe und einer Höchstzahl von Wiederaussendungen K berechneten externen Last G.

4. Verfahren der dynamischen Anpassung der Kapazität eines Konkurrenzübertragungskanals nach Anspruch 3, in dem die dritte gemessene Wahrscheinlichkeit einer Burst-Kollision Pc entweder direkt anhand der gemessenen Zahl von Bursts, die einer in dem Beobachtungsfenster beobachteten Kollision unterzogen wurden, geschätzt; oder aus der ersten gemessenen Wahrscheinlichkeit des leeren erwarteten Burst-Empfangs Pe und der zweiten gemessenen Wahrscheinlichkeit des korrekten Burst-Empfangs Ps nach dem Ausdruck berechnet wird:

$$P_c = 1 - (P_e + P_S).$$

5. Verfahren zur dynamischen Anpassung der Kapazität eines Konkurrenzübertragungskanals nach Anspruch 3, in dem die externe Last G für einen Kanal SA anhand des Ausdrucks

$$G = -P_e * Ln(P_e)/[1-(1-P_e)^{K+1}]$$

berechnet wird, in dem

    Pe die erste gemessene Wahrscheinlichkeit des leeren erwarteten Burst-Empfangs bezeichnet, und
    K die Höchstzahl der Wiederaussendungen bezeichnet.

6. Verfahren zur dynamischen Anpassung der Kapazität eines Konkurrenzübertragungskanals nach einem der Ansprüche 1 bis 5, in dem der erste obere Schwellenwert $S_H$ und der zweite untere Schwellenwert $S_L$ der sensiblen Größe anhand eines repräsentativen Modells des durch den Konkurrenzkanal verwendeten Protokolls bestimmt werden, um

    - die Entscheidungsfehler der Kapazitätsänderungen zu minimieren, und
    - die Entscheidungen der Kapazitätsänderungen zu stabilisieren, und
    - eine gute zeitliche Änderungsreaktionsfähigkeit zu sichern, und
    - die Leistungsmerkmale des Kanals zu optimieren, um einen Zusammenbruch des Kanals aufgrund einer zu großen Anzahl von Kollisionen zu vermeiden.

7. Verfahren zur dynamischen Anpassung der Kapazität eines Konkurrenzübertragungskanals nach einem der Ansprüche 1 bis 6, in dem eine Entscheidung $D_{up}$ ergriffen wird, die Kapazität des Kanals zu erhöhen, wenn die Überschreitung des ersten oberen Schwellenwerts $S_H$ von oben eine erste Anzahl $N_{up}$ aufeinanderfolgender Male stattgefunden hat, und/oder eine Entscheidung $D_{down}$ ergriffen wird, die Kapazität des Kanals zu verringern, wenn die Überschreitung des zweiten unteren Schwellenwerts $S_L$ eine zweite Anzahl $N_{down}$ aufeinanderfolgender Male von oben stattgefunden hat, wobei die erste Zahl $N_{up}$ die kleinste ganze Zahl größer oder gleich zwei ist, so dass:

$$(1 - D_{up})^{Nup} \leq P_{up\_res}$$

wobei
$D_{up}$ die Wahrscheinlichkeit einer guten Entscheidung, wenn der obere Schwellenwert einmal von unten überschritten wurde und $P_{up\_res}$ eine Restwahrscheinlichkeit einer schlechten vorbestimmten Entscheidung bezeichnet, und
wobei die zweite Zahl $N_{down}$ die kleinste ganze Zahl größer oder gleich zwei ist, so dass:

$$(1 - D_{down})^{Ndown} \leq P_{down\_res}$$

wobei
$D_{down}$ die Wahrscheinlichkeit einer guten Entscheidung, wenn der untere Schwellenwert von oben einmal überschritten wurde und $P_{down\_res}$ eine Restwahrscheinlichkeit einer schlechten vorbestimmten Entscheidung bezeichnet.

8. Verfahren der dynamischen Anpassung der Kapazität eines Konkurrenzübertragungskanals nach Anspruch 7, in dem
die zweite Anzahl aufeinanderfolgender Überschreitungen $N_{down}$ deutlich größer oder gleich der zweiten Anzahl aufeinanderfolgender Überschreitungen $N_{up}$ in einem Verhältnis $N_{down}/N_{up}$ größer oder gleich 5, vorzugsweise größer oder gleich 10 ist.

9. Verfahren zur dynamischen Anpassung der Kapazität eines Konkurrenzübertragungskanals nach einem der Ansprüche 1 bis 8, in dem die beschlossene Erhöhung und/oder die Verminderung der Kapazität des Kanals nach dem selben Muster des Wachstums und der Verminderung der Kapazität je Stufe oder Grad durchgeführt wird.

10. Verfahren zur dynamischen Anpassung der Kapazität eines Konkurrenzübertragungskanals nach einem der Ansprüche 1 bis 9, in dem
das durch den Kanal verwendete Konkurrenzzugriffsprotokoll in der gerasterten Gesamtheit der durch das Protokoll ALOHA mit zeitlicher oder gerasterter Segmentierung (auf englisch Slotted ALOHA) gebildeten Konkurrenzprotokolle und seinen Ableitungen, die den Fangeffekt CE (auf englisch Capture Effect) und/oder den Effekt der Benutzung einer Mannigfaltigkeit (zeitlich oder frequenzmäßig) und einer Konkurrenzauflösung CRD (auf englisch Contention Resolution Diversity) kombinieren, inbegriffen ist.

11. Verfahren zur dynamischen Anpassung der Kapazität eines Konkurrenzübertragungskanals nach einem der Ansprüche 1 bis 10, das ferner einen Initialisierungsschritt (114) umfasst, in dem zu einem Startzeitpunkt die aktuelle Kapazität des Übertragungskanals auf einen Wert der vorbestimmten Anfangskapazität gesetzt wird.

12. Verfahren zur dynamischen Anpassung der Kapazität eines Konkurrenzübertragungskanals nach Anspruch 11, in dem die Anfangskapazität eine mittlere Kapazität ist, die willkürlich auf das Minimum gleich einem Burst alle volle N Raster festgelegt wird.

13. Verfahren zur Übertragung von Datenpaketen oder Paketfragmenten in der Form von Bursts durch einen Konkurrenzübertragungskanal (20), der durch eine Vielzahl von Endgeräten (4, 6, 8) aufgeteilt wird, die ein erstes Netzwerk bilden und einen Uplink-Kanal (24) von den Endgeräten (4, 6, 8) zu einem Verbindungs-Gateway (12) für ein zweites Netzwerk definieren,
wobei das Übertragungsverfahren ein dynamisches Anpassungsverfahren (102) der nach einem der Ansprüche 1 bis 12 definierten Kapazität des Übertragungskanals (20) und ein mit dem dynamischen Anpassungsverfahren (102) der Kapazität gekoppeltes Verfahren der Flußsteuerung (404) umfasst, wobei das Verfahren der Flußsteuerung (404) die folgenden Schritte umfasst:

- in einem sechsten Schritt (406) eine aktuelle Liste der Endgeräteklassen zur Verfügung stellen, die die Endgeräteklassen, die zur Übertragung berechtigt sind und die Endgeräteklassen unterscheidet, denen die Übertragung untersagt ist,
- in einem siebten Schritt (408), wenn das Überschreiten des oberen Schwellenwerts $S_H$ eine Entscheidung veranlasst, die Kapazität des Kanals zu erhöhen und dabei eine vorbestimmte maximale Größe des Kanals erreicht wird, eine Erhöhung des Niveaus der Flußsteuerung auslösen, indem einer Geräteklasse, die berechtigt ist, aus der aktuellen Liste zu senden und die zufällig ausgewählt ist, das Senden untersagt ist, und
- in demselben siebten Schritt (408), wenn das Überschreiten des unteren Schwellenwerts $S_L$ eine Entscheidung veranlasst, die Kapazität des Kanals zu verringern, einen Abfall des Niveaus der Flußsteuerung auszulösen, indem einer Endgeräteklasse, der untersagt ist, aus der aktuellen Liste zu senden und die zufällig ausgewählt ist, erlaubt wird, zu senden.

14. Übertragungsverfahren nach Anspruch 13, das ein Verfahren der Staukontrolle (410) umfasst, das mit dem Verfahren der Flußsteuerung (404) gekoppelt ist und in dem die Verteilung der Verzögerungen der Endgeräte, die zum Aussenden berechtigt sind, eine wachsende Funktion des Niveaus der Flußsteuerung ist.

15. System zur Übertragung in der Form von Bursts von Datenpaketen oder Paketfragmenten durch einen Konkurrenzübertragungskanal (20), der
eine Vielzahl von Endgeräten (4, 6, 8), die ein erstes Netzwerk bilden, und
ein Verbindungs-Gateway (12) zu einem zweiten Netzwerk umfasst,
wobei das Verbindungs-Gateway (12) konfiguriert ist, um in der Form von Bursts Datenpakete oder Paketfragmente zu empfangen, die durch die Endgeräte auf einem Uplink-Konkurrenzübertragungskanal ausgesendet werden, und
um dynamisch die Kapazität des Uplink-Konkurrenzübertragungskanals als Funktion eines ankommenden Endgeräteverkehrs anzupassen,
und um fortlaufend in einem Beobachtungsfenster mit vordefinierter Breite und anhand von während des Empfangs durchgeführter Messungen in dem Beobachtungsfenster von erwarteten Bursts eine erste Empfangswahrscheinlichkeit des leeren erwarteten Bursts $P_e$ oder eines Paars der Wahrscheinlichkeiten zu schätzen, die durch die erste Wahrscheinlichkeit Pe und eine zweite korrekte Empfangswahrscheinlichkeit des Bursts $P_s$ oder eine dritte Wahrscheinlichkeit der Burst-Kollision $P_c$ gebildet wird;

eine aktuelle sensible Größe Gr bestimmen, die auf eine gleichförmige Art für die externe Last des Konkurrenzkanals sensibel ist, anhand der ersten geschätzten Wahrscheinlichkeit Pe oder des Paars der Wahrscheinlichkeiten, das durch die erste geschätzte Wahrscheinlichkeit Pe und die zweite geschätzte Wahrscheinlichkeit des Empfangs eines korrekten Bursts $P_s$, oder der dritten Empfangswahrscheinlichkeit eines Bursts, der einer Burst-Kollision $P_c$ unterzogen wurde, gebildet wird; dann,

wenn die aktuelle Größe einmal oder mehrer Male hintereinander einen ersten oberen Schwellenwert $S_H$ überschreitet und sich dabei von dem Wert der Größe entfernt, der der externen Nennlast entspricht, Erhöhen der aktuellen Kapazität des Übertragungskanals durch Freisetzen zusätzlicher Kommunikationsressourcen in Bezug auf zusätzliche Frequenzen und durch Informieren der Endgeräte durch einen Rückführungskanal über die neue Zusammensetzung des Übertragungskanals mit erhöhter Kapazität; und/oder,

wenn die aktuelle Größe einmal oder mehrere Male hintereinander einen zweiten oberen Schwellenwert $S_L$ überschreitet und sich dabei von dem Wert der Größe entfernt, der der externen Nennlast entspricht, Verringern der aktuellen Kapazität des Übertragungskanals durch Entfernen von Kommunikationsressourcen in Bezug auf Frequenzen unter den derzeit zur Verfügung gestellten Kommunikationsressourcen und durch Informieren der Endgeräte durch den Rückführungskanal über die neue Zusammensetzung des Übertragungskanals mit verringerter Kapazität.

16. System zur Übertragung von Datenpaketen oder Paketfragmenten nach Anspruch 15 in dem

- das Verbindungs-Gateway (12) konfiguriert wird, um einen Mechanismus der Flußsteuerung auszuführen, der aus dem Zurverfügungstellen einer aktuellen Liste von Endgeräteklassen besteht, die die Endgeräteklassen, die zur Übertragung berechtigt sind und die Endgeräteklassen unterscheidet, denen die Übertragung untersagt ist, und

* wenn das Überschreiten des oberen Schwellenwerts $S_H$ durch die aktuelle Größe Gr eine Entscheidung veranlasst, die Kapazität des Kanals zu erhöhen und dabei eine vorbestimmte maximale Größe des Kanals erreicht wird, eine Erhöhung des Niveaus der Flußsteuerung auslösen, indem einer Endgeräteklasse, die berechtigt ist, aus der aktuellen Liste zu senden und die zufällig ausgewählt wird, untersagt wird, zu senden, und

* wenn das Überschreiten des unteren Schwellenwerts $S_L$ durch die aktuelle Größe Gr eine Entscheidung veranlasst, die Kapazität des Kanals zu verringern, einen Abfall des Niveaus der Flußsteuerung auslösen, indem einer Endgeräteklasse, der untersagt ist, aus der aktuellen Liste zu senden und die zufällig ausgewählt ist, erlaubt wird, zu senden.

**Claims**

1. Method for dynamically adapting the capacity of a contention transmission channel (20) using a predetermined access protocol, the channel (20) being shared by a plurality of terminals (4, 6, 8) TE forming a first network and defining an uplink (24) from the terminals (4, 6, 8) to a gateway (12) GW of connection to a second network,
the method comprises the following steps:

- in a first step (104), fixing the value of an external loading desired as a nominal operating point of the channel (20), the actual external loading of the channel (20) being equal to the current rate of new entrant terminals sending a respective burst of data on the channel;
- in a second step (106), determining, with the aid of a mathematical model or of a simulation, a first upper threshold $S_H$ and a second lower threshold $S_L$ having a quantity Gr monotonically sensitive to an external loading of the contention channel, the upper and lower external loadings of the contention channel corresponding to the first upper threshold $S_H$ or second lower threshold $S_L$, respectively, the sensitive quantity Gr depending on a first probability of receiving an empty burst Pe, or on a pair of the first probability Pe and of a second probability of successfully receiving a burst Ps, or on a third probability of a burst having undergone a collision Pc, and on the type and on parameters defining the contention access protocol;
- in a third step (108), estimating continuously, over an observation window of predefined width and on the basis of measurements being received in the said observation window of the expected bursts, a first measured probability of receiving an empty expected burst Pe, or a pair of measured probabilities formed by the first measured probability Pe and a second measured probability of successfully receiving a burst Ps, or a third measured probability of a burst having undergone a collision Pc;
- in a fourth step (110), determining the current measured sensitive quantity Gr as a function of the first measured probability Pe, or of the pair of measured probabilities Pe and Ps, or of the third measured probability Pc;
- in a fifth decision-taking step (112),

when a crossing of the first upper threshold $S_H$ by the current sensitive quantity takes place once or several consecutive times while moving further away from the value of the quantity corresponding to the nominal external loading, increasing the current capacity of the transmission channel (20) by releasing additional communication resources and by informing the terminals through a return pathway of the new composition of the increased-capacity transmission channel; and/or
when a crossing of the second lower threshold $S_L$ takes place by the current sensitive quantity once or several consecutive times while moving further away from the value of the quantity corresponding to the nominal external loading, decreasing the current capacity of the transmission channel by removing communication resources in terms of frequencies from among the transmission resources currently made available and by informing the terminals through the return pathway of the new composition of the decreased-capacity transmission channel.

2. Method for dynamically adapting the capacity of a contention transmission channel according to claim 1, wherein
the width of the observation window defining the observation time period is chosen to be sufficiently small to filter amplitudes of a noise of fast fluctuations of the probability (Pe) or two probabilities (Pe, Ps) estimated continuously and to allow suitable reactivity.

3. Method for dynamically adapting the capacity of a contention transmission channel according to either claim 1 or claim 2, wherein
the quantity Gr which is monotonically sensitive to the external loading of the contention channel is included in the set made up of

- the first measured probability of receiving an empty expected burst Pe;
- the third measured probability of burst collision Pc;
- an external loading G calculated on the basis of the first measured probability of receiving an empty expected burst Pe and of a maximum number of retransmissions K.

4. Method for dynamically adapting the capacity of a contention transmission channel according to claim 3, wherein
the third measured probability of burst collision Pc is either
estimated directly on the basis of the measured number of bursts having undergone a collision that are observed in the observation window;
or calculated on the basis of a first measured probability of receiving an empty expected burst Pe and of the second measured probability of correctly receiving a burst Ps according to the expression:

$$P_c = 1 - (P_e + P_s).$$

5. Method for dynamically adapting the capacity of a contention transmission channel according to claim 3, wherein the external loading G is calculated for an SA channel on the basis of the expression:

$$G = -P_e * Ln(P_e)/[1-(1-P_e)^{K+1}]$$

Where

Pe designates the first measured probability of receiving an empty expected burst, and
K designates the maximum number of retransmissions.

6. Method for dynamically adapting the capacity of a contention transmission channel according to any one of claims 1 to 5, wherein
the first upper threshold $S_H$ and the second lower threshold $S_L$ of the sensitive quantity are determined on the basis of a model representative of the protocol used by the contention channel so as to

- minimize the errors in decisions regarding change of capacity, and
- stabilize the decisions regarding change of capacity, and
- ensure good temporal reactivity of change, and
- optimize the performance of the channel so as to avoid a collapse of the channel because of an excessively large number of collisions.

7. Method for dynamically adapting the capacity of a contention transmission channel according to any one of claims 1 to 6, wherein
a decision $D_{up}$ is taken to increase the capacity of the channel when the crossing of the first upper threshold $S_H$ from above has taken place a first number $N_{up}$ of consecutive times, and/or

a decision $D_{down}$ is taken to decrease the capacity of the channel when the crossing of the second lower threshold $S_L$ has taken place a second number $N_{down}$ of consecutive times from above,
the first number $N_{up}$ being the smallest whole number greater than or equal to two such that:

$$(1-D_{up})^{Nup} \leq P_{up\_res},$$

where
$D_{up}$ designates the probability of a good decision when the upper threshold has been crossed from below once and $P_{up\_res}$ a predetermined residual probability of a bad decision, and
the second number $N_{down}$ being the smallest whole number greater than or equal to two such that:

$$(1-D_{down})^{Ndown} \leq P_{down\_res},$$

where
$D_{down}$ designates the probability of a good decision when the lower threshold has been crossed from above once and $P_{down\_res}$ a predetermined residual probability of a bad decision.

8. Method for dynamically adapting the capacity of a contention transmission channel according to claim 7, wherein
the second number of consecutive crossings $N_{down}$ is markedly greater than or equal to the second number of consecutive crossings $N_{up}$ in a ratio $N_{down}/N_{up}$ greater than or equal to 5, preferably greater than or equal to 10.

9. Method for dynamically adapting the capacity of a contention transmission channel according to any one of claims 1 to 8, wherein the decided increasing and/or decreasing of capacity of the channel is performed by following in a way one and the same profile of growth and decrease of the capacity in stages or by degrees.

10. Method for dynamically adapting the capacity of a contention transmission channel according to any one of claims 1 to 9, wherein
the contention access protocol used by the channel is included in the slotted set of contention protocols made up of the time-segmentation or slotted ALOHA protocol and its derivatives combining the capture effect CE and/or the effect of using (temporal or frequency) diversity and access conflict resolution CRD (Contention Resolution Diversity).

11. Method for dynamically adapting the capacity of a contention transmission channel according to any one of claims 1 to 10, further comprising an initialization step (114) in the course of which at a booting time the current capacity of the transmission channel is set to a predetermined initial capacity value.

12. Method for dynamically adapting the capacity of a contention transmission channel according to claim 11, wherein the initial capacity is an arbitrarily fixed average capacity at the minimum equal to a burst every N whole frames.

13. Method for transmitting data packets or fragments of packets in the form of bursts through a contention transmission channel (20), shared by a plurality of terminals (4, 6, 8) forming a first network and defining an uplink (24) from the terminals (4, 6, 8) to a gateway for connection (12) to a second network,
the said transmission method comprises a method (102) of dynamically adapting the capacity of the transmission channel (20), defined according to any one of claims 1 to 12 and a stream control method (404) coupled with the said method (102) of dynamically adapting the capacity,
the stream control method (404) comprising the following steps:

- in a sixth step (406) providing a current list of classes of terminals distinguishing the classes of terminals authorized to send and the classes of terminals that are prohibited from sending,
- in a seventh step (408), when the crossing of the upper threshold $S_H$ prompts a decision to increase the capacity of the channel and when a predetermined maximum size of the channel is reached, triggering an increase in the level of stream control while prohibiting sending for a class of terminals which is authorized to send of the current list and which is chosen randomly, and
- in the same seventh step (408), when the crossing of the lower threshold $S_L$ prompts a decision to decrease the capacity of the channel, triggering a reduction in the level of stream control while authorizing sending for a class of terminals which is prohibited from sending of the current list and which is chosen randomly.

14. Method of transmitting according to claim 13, comprising a congestion control method (410), coupled with the stream control method (404) and wherein the spreading of the lags of the terminals authorized to send is an increasing function of the level of stream control.

15. System for transmitting in the form of bursts of data packets or fragments of packets through a contention transmission channel (20), comprising a plurality of terminals (4, 6 8) forming a first network, and

a gateway (12) for connection to a second network, the connection gateway (12) being configured

to receive in the form of bursts data packets or fragments of packets sent by the terminals on a contention uplink transmission channel, and

to dynamically adapt the capacity of the said contention uplink transmission channel as a function of a traffic of entrant terminals,

and to estimate continuously over an observation window of predefined width and on the basis of measurements performed in reception in the said observation window of the expected bursts a first probability of receiving an empty expected burst $P_e$, or a pair of probabilities made up of the first probability Pe and a second probability of correctly receiving a burst $P_s$, or a third probability of burst collision $P_c$;

determine a current quantity Gr monotonically sensitive to the external loading of the contention channel on the basis of the first estimated probability Pe or the pair of probabilities made up of the first estimated probability Pe and the second estimated probability of receiving a correct burst $P_s$, or the third probability of receiving a burst having undergone a collision of a burst $P_c$; then

when a crossing of a first upper threshold $S_H$ by the current quantity takes place once or several consecutive times while moving further away from the value of the quantity corresponding to the nominal external loading, increase the current capacity of the transmission channel by releasing additional communication resources in terms of additional frequencies and by informing the terminals through a return pathway of the new composition of the increased-capacity transmission channel; and/or

when a crossing of the second lower threshold $S_L$ by the current quantity takes place once or several consecutive times while moving further away from the value of the quantity corresponding to the nominal external loading, decrease the current capacity of the transmission channel by removing communication resources in terms of frequencies from among the transmission resources currently made available and by informing the terminals through the return pathway of the new composition of the decreased-capacity transmission channel.

16. System for transmitting data packets or fragments of packets according to claim 15, wherein

- the connection gateway (12) is configured to implement a stream control mechanism consisting in

providing a current list of classes of terminals distinguishing the classes of terminals authorized to send and the classes of terminals that are prohibited from sending, and

* when the crossing of the upper threshold $S_H$ by the current quantity Gr prompts a decision to increase the capacity of the channel and when a predetermined maximum size of the channel is reached, triggering an increase in the level of stream control while prohibiting sending for a class of terminals which is authorized to send of the current list and which is chosen randomly, and

* when the crossing of the lower threshold $S_L$ by the current quantity Gr prompts a decision to decrease the capacity of the channel, triggering a reduction in the level of stream control while authorizing sending for a class of terminals which is prohibited from sending of the current list and which is chosen randomly.

FIG.1

102

| 114 |
| :---: |

| 104 |
| :---: |

| 106 |
| :---: |

| 108 |
| :---: |

| 110 |
| :---: |

| 112 |
| :---: |

FIG.2

152

Voie montante 22
+
Voie descendante 34

12

TE ⟺ Interface sans fil ⟺ GW

[SIG-CH]
154

156

158 [RACH]

160

162 [SIG-CH]

temps

164

166

170

[RACH]
168

[SIG-CH]
172

FIG.3

FIG.4A

FIG.4B

Seuils de décision d'augmenter/diminuer la capacité
en fonction de $P_e$ ou $P_c$

FIG.5

FIG.6

282

| | | | | | | |
|---|---|---|---|---|---|---|
| Décision d'accroissement: passage de l'index $I_D$-1 à $I_D$ → | | | | | | |
| ← Décision de réduction : passage de l'index $I_D$ à $I_D$-1 | | | | | | |
| **1** (index par défaut) | **2** | **3** | **4** | **5** | **6** | **7** |
| | | | | | | |
| **3** (capacité minimale) | **5** | **8** | **16** | **24** | **32** | **64** (capacité maximale) |

← Index de décision courant $I_D$ (1à7)

← Capacité du canal C associé à l'index de décision $I_D$

## FIG.7

EP 3 151 627 B1

FIG.8A

FIG.8B

FIG.9A

FIG.9B

FIG.9C

352

372

Configuration classique :
5 salves montantes

Configuration utilisant RACH
pour le transfert de données :
2 salves descendantes

UE

GW

UE

GW

RTT

Requête d'accès
[RACH]

TRF[RACH]

TRF[RACH]

354

Temps de transfert

Admission
DCCH attribué
[CCCH]

Signalisation SA-
MAC (0, 1, 1)
[CCCH]

Activité
périodique
du DCCH

(typic ~1sec)

Temps de transfert

Capacité requise
[DCCH]

356

Ressources
accordées [CCCH]

Activité périodique du DCCH

358

TRF[DTCH]

TRF[DTCH]

Libération[DCCH]

360

FIG.10

**FIG.11A**

**FIG.11B**

FIG.12

FIG.13

EP 3 151 627 B1

Ne, Ns et N issues de l'étage 518

520

Activer la mise à jour RACH ? — Non → Fin — 536

534

Oui

Estimer Pe, Ps, Pc — 538

540

Condition de diminution capacité satisfaite ? — Oui → Diminuer le niveau de contrôle de flux RACH — 542

532

Non

544 — Diminution de la capacité possible ? — Non → Fin — 546

Oui → Diminuer la composition de RACH — 548

550

Condition d'augmentation capacité satisfaite ? — Oui → 552 Augmentation de la capacité possible ? — Oui → Augmenter la composition de RACH — 554

Non → Fin

Non → 556 Augmenter le niveau de contrôle de flux RACH

522

FIG.14

FIG.15

EP 3 151 627 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1686746 B1
- EP 2787702 A1